(19) Europäisches Patentamt
European Patent Office
Office européen des brevets

(11) EP 1 361 226 A2

(12) **EUROPÄISCHE PATENTANMELDUNG**

(43) Veröffentlichungstag:
**12.11.2003 Patentblatt 2003/46**

(51) Int Cl.[7]: **C07F 17/00**

(21) Anmeldenummer: **03015009.8**

(22) Anmeldetag: **18.11.1999**

(84) Benannte Vertragsstaaten:
**CH DE ES FR GB IT LI NL**

(30) Priorität: **11.01.1999 DE 19900585**
**25.11.1998 DE 19854350**

(62) Dokumentnummer(n) der früheren Anmeldung(en) nach Art. 76 EPÜ:
**99958064.0 / 1 133 503**

(71) Anmelder: **Basell Polyolefine GmbH**
**50389 Wesseling (DE)**

(72) Erfinder:
- **Bingel, Carsten**
  **67105 Schifferstadt (DE)**
- **Müller, Patrik**
  **67663 Kaiserslautern (DE)**
- **Brintzinger, Hans-Herbert**
  **8274 Tägerwilen (CH)**
- **Damrau, Hans-Robert-Hellmuth**
  **78462 Konstanz (DE)**

(54) **Verfahren zur Aufreinigung von Metallocenen**

(57) Die vorliegende Erfindung betrifft ein Verfahren zur Aufreinigung von Metallocenen, wobei ein schlecht lösliches Metallocenhalogenid durch Austausch mindestens eines Halogenidliganden durch einen alternativen negativ geladenen Liganden in ein gut lösliches und gut kristallisierbares Metallocen umgewandelt wird, welches anschließend durch Kristallisation auf gereinigt wird.

EP 1 361 226 A2

Printed by Jouve, 75001 PARIS (FR)

## Beschreibung

Die vorliegende Erfindung betrifft ein Verfahren zur Aufreinigung von Metallocenen, wobei ein schlecht lösliches Metallocenhalogenid durch Austausch mindestens eines Halogenidliganden durch einen alternativen negativ geladenen Liganden in ein gut lösliches und gut kristallisierbares Metallocen umgewandelt wird, welches anschließend durch Kristallisation aufgereinigt wird.

Metallocene können, gegebenenfalls in Kombination mit einem oder mehreren Co-Katalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen (EP-A-129368).

Die Herstellung von Metallocenen ist an sich bekannt (US 4,752,597; US 5,017,714; EP-A-320762; EP-A-416815; EP-A-537686; EP-A- 669340; H.H. Brintzinger et al.; Angew. Chem., 107 (1995), 1255; H.H. Brintzinger et al., J. Organomet. Chem. 232 (1982), 233). Dazu können zum Beispiel Cyclopentadienyl-Metall-Verbindungen mit Halogeniden von Übergangsmetallen wie Titan, Zirkonium und Hafnium umgesetzt werden. Die gebildeten Metallocendihalogenide, in der Regel die Metallocendichloride, sind im Falle der technisch interessanten racemischen Ansa-Bis-indenyl-Metallocene, die für die Herstellung von isotaktischem Polypropylen benötigt werden (EP 0485823, EP 0549900, EP 0576970, WO 98/40331), in der Regel schwer lösliche Verbindungen. Die bei den Synthesen gebildeten Rohprodukte enthalten neben den gewünschten Metallocenen, erhebliche Mengen an anorganischen Nebenprodukten (z. B. Salze), metallorganischen Nebenprodukten (z. B. Isomere) und organischen Nebenprodukten (z. B. nicht umgesetzte substituierte Cyclopentadienylliganden). Bei der Verwendung von Metallocenen als Katalysatorkomponente, sowohl in homogenen als auch in heterogenisierten Katalysatorsystemen, beeinträchtigen die Nebenprodukte die Katalysatoraktivität bei der Olefinpolymerisation.

Für die Aufreinigung der Rohprodukte, die gewünschtes racemisches Ansa-Bis-indenyl-Metallocen enthalten, sind Methoden bekannt, durch deren Anwendung anorganische, metallorganische und organische Nebenprodukte vom gewünschten Metallocen abgetrennt werden können. In US 5,455,366 und EP 576970 werden die racemischen Metallocene durch Extraktion mit Methylenchlorid und anschließender Kristallisation vom Lithiumchlorid, dem Meso-Isomer und organischen Verunreinigungen befreit. In DE 19547247 und DE 19547248 werden die Rohprodukte aus der Metallocensynthese durch Behandlung mit polaren und/oder protischen Lösungsmitteln von den unerwünschten Nebenprodukten befreit. In US 5,556,997 wird ein mit Tetrahydrofuran-haltigen Nebenprodukten verunreinigtes Metallocen durch Behandlung mit Tetrahydrofuran weiter aufgereinigt.

Obwohl mit den bekannten Methoden der größte Teil der Nebenprodukte von dem jeweils gewünschten racemischen Metallocen abgetrennt werden kann, zeigen die mit den so aufgereinigten Metallocenen hergestellten Katalysatoren, insbesondere geträgerte Katalysatoren, häufig eine unzureichende Aktivität oder der Anteil an unerwünschten niedermolekularen Polyolefinen, sogenannte extrahierbare Anteile, ist zu groß. Werden durch eine nochmalige Umkristallisation aufgereinigte Metallocene als Katalysatorkomponente eingesetzt, gelingt es, die eben genannten Nachteile bei der Polymerisation zu vermeiden. Wegen der Schwerlöslichkeit der technisch relevanten Ansa-Bisindenyl-metallocendichloride werden jedoch große Mengen Lösungsmittel benötigt. Somit stellt die einfache Umkristallisation der Metallocendichloride einen unwirtschaftlichen Prozeßschritt dar.

Es bestand also die Aufgabe, ein wirtschaftliches Aufreinigungsverfahren zu finden, um Metallocene mit der geforderten Qualität bereitstellen zu können.

Es wurde nun überraschenderweise gefunden, daß durch ein einfaches Verfahren die der Erfindung zugrunde liegende Aufgabe gelöst wird, wobei die schwerlöslichen, unzureichend aufgereinigten Metallocenhalogenide durch Austausch mindestens eines Halogenidliganden in besser lösliche und gut kristallisierbare Metallocene umgewandelt werden, und die so hergestellten neuen Metallocene nach Abtrennung von unlöslichen Bestandteilen durch Kristallisation aufgereinigt erhalten werden.

Gegenstand der vorliegenden Erfindung ist somit ein Verfahren zur Aufreinigung von Verbindungen der Formel (Ia)

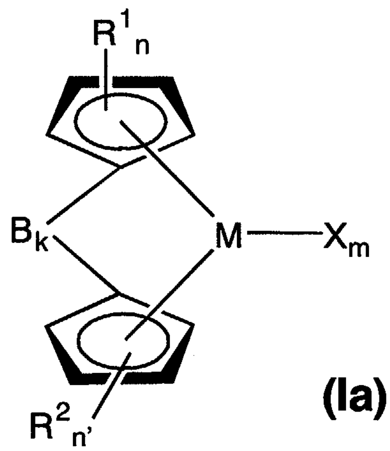

(Ia)

worin

M ein Metall der III., IV., V. oder VI. Nebengruppe des Periodensystems der Elemente ist, insbesondere Ti, Zr oder Hf, besonders bevorzugt Zirkonium,

$R^1$ gleich oder verschieden sind und ein Rest $Si(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{20}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl,
oder $R^1$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist,
oder zwei oder mehrere Reste $R^1$ können so miteinander verbunden sein, daß die Reste $R^1$ und die sie verbindenden Atome des Cyclopentadienylringes ein $C_4$-$C_{24}$-Ringsystem bilden, welches seinerseits substituiert sein kann,

$R^2$ gleich oder verschieden sind und Rest $Si(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl,
oder $R^2$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist,
oder zwei oder mehrere Reste $R^2$ können so miteinander verbunden sein, daß die Reste $R^2$ und die sie verbindenden Atome des Cyclopentadienylringes ein $C_4$-$C_{24}$-Ringsystem bilden, welches seinerseits substituiert sein kann,

X ein Halogenatom, insbesondere Chlor, ist,

n gleich 1 bis 5 für k = 0, und n gleich 0 bis 4 für k = 1 ist,

n' gleich 1 bis 5 für k = 0, und n' gleich 0 bis 4 für k = 1 ist,

m gleich 1 bis 4 ist, bevorzugt 2,

k gleich Null oder 1 ist, wobei für k = 0 ein unverbrücktes Metallocen, für k = 1 ein verbrücktes Metallocen vorliegt, wobei k = 1 bevorzugt ist, und

B ein verbrückendes Strukturelement zwischen den beiden Cyclopentadienylringen bezeichnet, bedeutet

umfassend die Schritte:

a) Umsetzung der Verbindung der Formel (Ia) mit einer Ligandenaustausch-komponente

$$M^1YR^3$$

worin

- $M^1$ ein Kation oder Kationfragment, insbesondere Li, Na, K, MgCl, MgBr, MgI, oder das mit einem Amin korrespondierende Ammoniumskation ist,
- $R^3$ gleich oder verschieden Wasserstoff oder eine $C_1$-$C_{40}$ - kohlenstoffhaltige Gruppe, bevorzugt $C_1$-$C_{25}$-Alkyl, wie Methyl, Ethyl, n-Propyl, iso-Propyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl wie Pyridyl, Furyl oder Chinolyl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,
- Y ein Element der 6. Hauptgruppe des Periodensystems der Elemente, insbesondere Sauerstoff oder Schwefel, oder ein Fragment $CR^3_2$, $NR^3$, $NR^3(CO)$-, $NR^3(SO_2)$-, $PR^3$, $(=O)R^3$, O(CO)- oder $O(SO_2)$- ist.

unter Ausbildung der Verbindung der Formel (I)

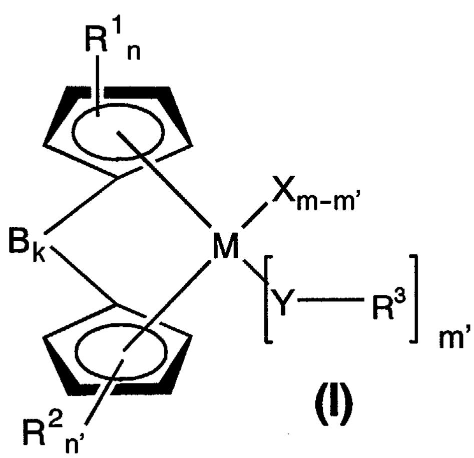

(I)

worin

| | |
|---|---|
| M, $R^1$, $R^2$, $R^3$, X, Y, n, n', m, k, B und $R^{12}$ | die vorstehende Bedeutung haben und |
| m' | gleich 1 bis 4 ist, bevorzugt 1 oder 2, |

wobei die Verbindung der Formel $M^1X$, wobei $M^1$ und X die vorstehenden Bedeutungen haben, abgespalten wird, in einem inerten Lösungsmittel oder Lösungsmittelgemisch,
b) gegebenenfalls Abtrennung von festen Rückständen der Formel $M^1X$
c) gegebenenfalls Abtrennen des inerten Lösungsmittels oder Lösungsmittelgemisches,
d) Umkristallisation der Verbindung der Formel (I) in einem aprotischen Kohlenwasserstoff,
e) Abtrennen der Verbindung der Formel (I) von der Mutterlauge.

Bei dem erfindungsgemäßen Aufreinigungsverfahren, wird ein Metallocen der Formel (Ia) in ein Metallocen der Formel (I) überführt und anschließend umkristallisiert.

Bei dem erfindungsgemäßen Verfahren steht die Verbindung der Formel (Ia) und (I) für die Verbindungen

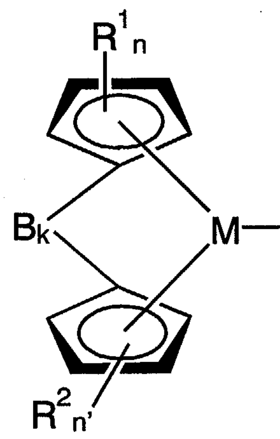

(Ia)

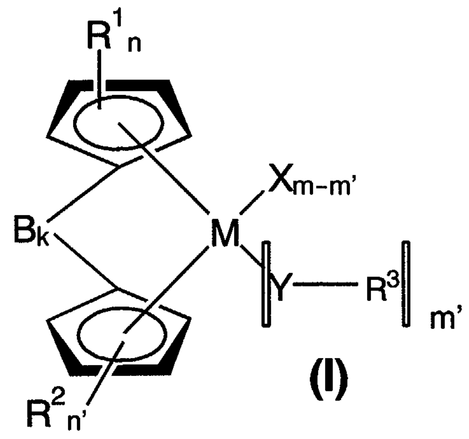

(I)

worin

M ein Metall der III., IV., V. oder VI. Nebengruppe des Periodensystems der Elemente ist, insbesondere Ti, Zr oder Hf, besonders bevorzugt Zirkonium,

$R^1$ gleich oder verschieden sind und ein Rest $Si(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{20}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl,
oder $R^1$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist,
oder zwei oder mehrere Reste $R^1$ können so miteinander verbunden sein, daß die Reste $R^1$ und die sie verbindenden Atome des Cyclopentadienylringes ein $C_4$-$C_{24}$-Ringsystem bilden, welches seinerseits substituiert sein kann,

$R^2$ gleich oder verschieden sind und Rest $Si(R^{12})_3$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl,
oder $R^2$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_{7-}C_{30}$-Alkylaryl oder $C_1$-$C_{12}$-Alkoxy ist,
oder zwei oder mehrere Reste $R^2$ können so miteinander verbunden sein, daß die Reste $R^2$ und die sie verbindenden Atome des Cyclopentadienylringes ein $C_4$-$C_{24}$-Ringsystem bilden, welches seinerseits substituiert sein kann,

$R^3$ gleich oder verschieden Wasserstoff oder eine $C_1$-$C_{40}$ - kohlenstoffhaltige Gruppe, bevorzugt $C_1$-$C_{25}$-Alkyl, wie Methyl, Ethyl, n-Propyl, iso-Propyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl wie Pyridyl, Furyl oder Chinolyl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_{7-}C_{30}$-Alkylaryl ist,

X ein Halogenatom, insbesondere Chlor, ist,

Y ein Element der 6. Hauptgruppe des Periodensystems der Elemente, insbesondere Sauerstoff oder Schwefel, oder ein Fragment $CR^32$, $NR^3$, $NR^3(CO)$-, $NR^3(SO_2)$-, $PR^3$, $P(=O)R^3$, O(CO)- oder $O(SO_2)$- ist.

n gleich 1 bis 5 für k = 0, und n gleich 0 bis 4 für k = 1 ist,

n' gleich 1 bis 5 für k = 0, und n' gleich 0 bis 4 für k = 1 ist,

m gleich 1 bis 4 ist, bevorzugt 2,

m' gleich 1 bis 4 ist, bevorzugt 1 oder 2,

k gleich Null oder 1 ist, wobei für k = 0 ein unverbrücktes Metallocen, für k = 1 ein verbrücktes Metallocen vorliegt, wobei k = 1 bevorzugt ist, und

B ein verbrückendes Strukturelement zwischen den beiden Cyclopentadienylringen bezeichnet.

Beispiele für B sind Gruppen $M^3R^{13}R^{14}$, worin $M^3$ Kohlenstoff, Silizium, Germanium oder Zinn ist und $R^{13}$ und $R^{14}$ gleich oder verschieden eine $C_1$-$C_{20}$-kohlenwasserstoffhaltige Gruppe wie $C_1$-$C_{10}$-Alkyl, $C_6$-$C_{14}$-Aryl oder Trimethylsilyl bedeuten. Bevorzugt ist B gleich $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2Si$, $(C_6H_5)(CH_3)Si$, $Si(CH_3)(SiR^{20}R^{21}R^{22})$, $(C_6H_5)_2Ge$, $(C_6H_5)_2Sn$, $(CH_2)_4Si$, $CH_2Si(CH_3)_2$, o-$C_6H_4$ oder 2,2'-$(C_6H_4)_2$. Wobei $R^{20}R^{21}R^{22}$ gleich oder verschieden eine $C_1$-$C_{20}$-kohlenwasserstoff-haltige Gruppe wie $C_1$-$C_{10}$-Alkyl oder $C_6$-$C_{14}$-Aryl bedeuten. B kann auch mit einem oder mehreren Resten $R^1$ und/oder $R^2$ ein mono- oder polycyclisches Ringsystem bilden.

Bei dem erfindungsgemäßen Aufreinigungsverfahren werden Metallocenhalogenide der Formel (Ia) durch Umsetzung mit einer Ligandaustauschkomponente in einem Reaktionsschritt direkt zu Metallocenen der Formel (I) umgesetzt, welche auf Grund ihrer guten Löslichkeit durch Kristallisation in hoher Raum-Zeit-Ausbeute in der benötigten Reinheit erhalten werden.

Bevorzugt wird ein Aufreinigungsverfahren, wobei aus einem verbrückten Metallocen der Formel (Ia) ein verbrücktes Metallocen der Formel (I) gebildet wird, insbesondere solche verbrückten Metallocene, in denen k gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit $C_1$-$C_{20}$-kohlenstoffhaltigen Gruppen, wie $C_1$-$C_{18}$-Alkyl oder $C_6$-$C_{18}$-Aryl, wobei auch zwei oder mehrere Substituenten des Indenylrings zusammen ein Ringsystem bilden können.

Besonders bevorzugt wird ein Aufreinigungsverfahren, wobei aus einem verbrückten Metallocen der Formel (IIa) ein verbrücktes Metallocen der Formel (II) gebildet wird,

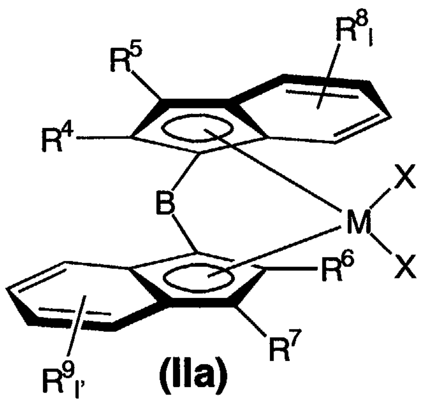

(IIa)

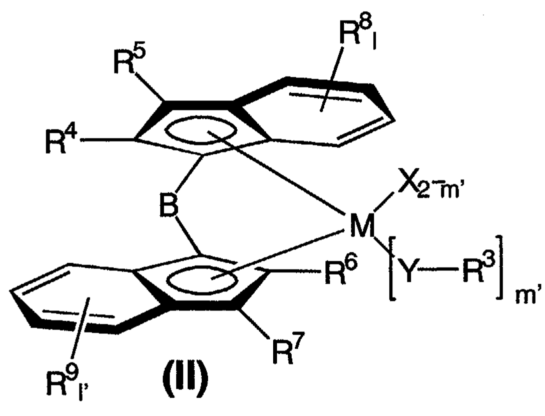

(II)

worin

M gleich Ti, Zr oder Hf ist, besonders bevorzugt Zirkonium,

$R^3$ gleich oder verschieden Wasserstoff oder eine $C_1$-$C_{30}$ - kohlenstoffhaltige Gruppe, bevorzugt $C_1$-$C_{10}$-Alkyl, wie Methyl, Ethyl, n-Propyl, iso-Propyl, tert.-Butyl, Cyclohexyl oder Octyl, $C_2$-$C_{16}$-Alkenyl, $C_6$-$C_{24}$-Aryl, $C_5$-$C_{24}$-Heteroaryl wie Pyridyl, Furyl oder Chinolyl, $C_7$-$C_{30}$-Arylalkyl, $C_7$-$C_{30}$-Alkylaryl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,

$R^4$, $R^6$ gleich oder verschieden sind und ein Wasserstoffatom, eine $C_1$-$C_{20}$ - kohlenstoffhaltige Gruppe, bevorzugt $C_1$-$C_{18}$-Alkyl, wie Methyl, Ethyl, n-Butyl, Cyclohexyl oder Octyl, $C_2$-$C_{10}$-Alkenyl, $C_3$-$C_{15}$-Alkylalkenyl, $C_6$-$C_{18}$-Aryl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl ist,

$R^5$, $R^7$ gleich oder verschieden sind und ein Wasserstoffatom, eine $C_1$-$C_{20}$ - kohlenstoffhaltige Gruppe, bevorzugt $C_1$-$C_{18}$-Alkyl, wie Methyl, Ethyl, n-Butyl, Cyclohexyl oder Octyl, $C_2$-$C_{10}$-Alkenyl, $C_3$-$C_{15}$-Alkylalkenyl, $C_6$-$C_{18}$-Aryl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl ist,

$R^8$ und $R^9$gleich oder verschieden sind und ein Wasserstoffatom, Halogenatom oder eine $C_1$-$C_{20}$ - kohlenstoffhaltige Gruppe bedeuteten, bevorzugt eine lineare oder verzweigte $C_1$-$C_{18}$-Alkylgruppe, wie Methyl, Ethyl, tert. -Butyl, Cyclohexyl oder Octyl, $C_2$-$C_{10}$-Alkenyl, $C_3$-$C_{15}$-Alkylalkenyl, eine $C_6$-$C_{18}$-Arylgruppe, die gegebenenfalls substituiert sein kann, insbesondere Phenyl, Tolyl, Xylyl, tert.-Butylphenyl, Ethylphenyl, Di-tert.-butyl-phenyl, Naphthyl, Acenaphthyl, Phenanthrenyl oder Anthracenyl, $C_5$-$C_{18}$-Heteroaryl wie Pyridyl, Furyl oder Chinolyl, $C_7$-$C_{20}$-Arylalkyl, $C_7$-$C_{20}$-Alkylaryl, fluorhaltiges $C_1$-$C_{12}$-Alkyl, fluorhaltiges $C_6$-$C_{18}$-Aryl, fluorhaltiges $C_7$-$C_{20}$-Arylalkyl oder fluorhaltiges $C_7$-$C_{20}$-Alkylaryl sind, und zwei Reste $R^8$ oder $R^9$ ein mono- oder polycyclisches Ringssystem bilden können, das seinerseits gegebenenfalls substituiert sein kann,

X ein Halogenatom, insbesondere Chlor, ist,

Y ein Element der 6. Hauptgruppe des Periodensystems der Elemente, insbesondere Sauerstoff oder Schwefel, oder ein Fragment $CR^3_2$, $NR^3$, $NR^3(CO)$-, $NR^3(SO_2)$-, PR 3, $P(=O)R^3$, O(CO)- oder $O(SO_2)$- ist,

l, l' gleich oder verschieden eine ganze Zahl zwischen Null und 4, bevorzugt 1 oder 2, besonders bevorzugt gleich 1 sind,

m' gleich 1 oder 2 ist,

B ein verbrückendes Strukturelement zwischen den beiden Indenylresten bezeichnet.

Beispiele für B sind Gruppen $M^3R^{13}R^{14}$, worin $M^3$ Kohlenstoff, Silizium, Germanium oder Zinn ist, bevorzugt Kohlenstoff und Silizium, und $R^{13}$ und $R^{14}$ gleich oder verschieden Wasserstoff, eine $C_1$-$C_{20}$-kohlenwasserstoffhaltige Gruppe wie $C_1$-$C_{10}$-Alkyl, $C_6$-$C_{14}$-Aryl oder Trimethylsilyl bedeuten. Bevorzugt ist B gleich $CH_2$, $CH_2CH_2$, $CH(CH_3)CH_2$, $CH(C_4H_9)C(CH_3)_2$, $C(CH_3)_2$, $(CH_3)_2Si$, $(CH_3)_2Ge$, $(CH_3)_2Sn$, $(C_6H_5)_2C$, $(C_6H_5)_2Si$, $(C_6H_5)(CH_3)Si$, $Si(CH_3)(SiR^{20}R^{21}R^{22})$, $(C_6H_5)_2Ge$, $(C_6H_5)_2Sn$, $(CH_2)_4Si$, $CH_2Si(CH_3)_2$, o-$C_6H_4$ oder 2,2'-$(C_6H_4)_2$. Wobei $R^{20}R^{21}R^{22}$ gleich oder verschieden eine $C_1$-$C_{20}$-kohlenwasserstoff-haltige Gruppe wie $C_1$-$C_{10}$-Alkyl oder $C_6$-$C_{14}$-Aryl bedeuten.

Ganz besonders bevorzugt wird ein Aufreinigungsverfahren, wobei aus einem verbrückten Metallocen der Formel (IIa) ein verbrücktes Metallocen der Formel (II) gebildet wird, worin

M gleich Zirkonium ist,

$R^3$ gleich oder verschieden Wasserstoff oder eine $C_1$-$C_{30}$ - kohlenstoffhaltige Gruppe, bevorzugt $C_i$-$C_{io}$-Alkyl, wie Methyl, Ethyl, n-Propyl, iso-Propyl, tert.-Butyl, Cyclohexyl oder Octyl, $C_2$-$C_{12}$-Alkenyl, $C_6$-$C_{24}$-Aryl, $C_5$-$C_{24}$-Heteroaryl wie Pyridyl, Furyl oder Chinolyl, $C_7$-$C_{30}$-Arylalkyl, $C_7$-$C_{30}$-Alkylaryl, fluorhaltiges $C_6$-$C_{24}$-Aryl, fluorhaltiges $C_7$-$C_{30}$-Arylalkyl oder fluorhaltiges $C_7$-$C_{30}$-Alkylaryl ist,

$R^4$, R6 gleich oder verschieden sind und ein Wasserstoffatom oder eine $C_1$-$C_{12}$-Alkylgruppe, bevorzugt eine Alkylgruppe wie Methyl, Ethyl, n-Butyl, oder Octyl sind, besonders bevorzugt Methyl oder Ethyl ist,

$R^5$, $R^7$ gleich Wasserstoffatome sind,

$R^8$ und $R^9$gleich oder verschieden sind und ein Wasserstoffatom, Halogenatom oder eine $C_1$-$C_{20}$ - kohlenstoffhaltige Gruppe bedeuten, bevorzugt eine lineare oder verzweigte $C_1$-$C_8$-Alkylgruppe, wie Methyl, Ethyl, tert.-Butyl, Cyclohexyl oder Octyl, $C_2$-$C_6$-Alkenyl, $C_3$-$C_6$-Alkylalkenyl, eine $C_6$-$C_{18}$-Arylgruppe, die gegebenenfalls substituiert sein kann, insbesondere Phenyl, Tolyl, Xylyl, tert.-Butylphenyl, Ethylphenyl, Di-tert.-butyl-phenyl, Naphthyl, Acenaphthyl, Phenanthrenyl oder Anthracenyl, $C_5$-$C_{18}$-Heteroaryl wie Pyridyl, Furyl oder Chinolyl, $C_7$-$C_{12}$-Arylalkyl, $C_7$-$C_{12}$-Alkylaryl, fluorhaltiges $C_1$-$C_8$-Alkyl, fluorhaltiges $C_6$-$C_{18}$-Aryl, fluorhaltiges $C_7$-$C_{12}$-Arylalkyl oder fluorhaltiges $C_{7-}C_{12}$-Alkylaryl ist,

X Chlor ist,

Y ein Element der 6. Hauptgruppe des Periodensystems der Elemente, insbesondere Sauerstoff oder Schwe-

fel, oder ein Fragment $CR^3_2$, $NR^3$, $NR^3(CO)$-, $NR^3(SO_2)$-, PR $^3$, $P(=O)R^3$, O(CO)- oder $O(SO_2)$- ist,

l, l' gleich oder verschieden eine ganze Zahl zwischen Null und 4, bevorzugt 1 oder 2, besonders bevorzugt gleich 1 ist,

m' gleich 1 oder 2 ist, bevorzugt 1, und

B ein verbrückendes Strukturelement zwischen den beiden Indenylresten bezeichnet, wobei bevorzugt B gleich $(CH_3)_2Si$, $(CH_3)_2Ge$, $(C_6H_5)_2Si$, $(C_6H_5)(CH_3)Si$, $CH_2CH_2$, $CH(CH_3)CH_2$, $CH(C_4H_9)C(CH_3)_2$, $CH_2$, C $(CH_3)_2$, $(C_6H_5)_2C$ ist, besonders bevorzugt $(CH_3)_2Si$, $CH_2$ und $CH_2CH_2$ ist.

Im Falle, daß Y = Sauerstoff und $R^3$ gleich Alkenyl, können im Alkenylrest einzelne $CH_2$-Einheiten durch C=O, C(O)O oder $C(O)NR^3$ substituiert sein.

Die bei dem erfindungsgemäßen Aufreinigungsverfahren erhaltenen Metallocene der Formeln I und II zeichnen sich dadurch aus, daß sie im Vergleich zu den entsprechenden Metallocen der Formeln (Ia) und (IIa) eine deutlich bessere Löslichkeit in inerten organischen Lösungsmitteln zeigen. Eine deutlich besser Löslichkeit soll bedeutet, daß sich die molaren Konzentrationen in organischen Lösungsmitteln mindestens verdoppeln, bevorzugt mehr als vervierfachen und ganz besonders bevorzugt mehr als verachtfachen.

Als inerte organische Lösungsmittel für Metallocene werden für gewöhnlich aliphatische oder aromatische Kohlenwasserstoffe, aber auch halogenhaltige, sauerstoffhaltige oder stickstoffhaltige Kohlenwasserstoffe eingesetzt. Nicht einschränkende Beispiele für die einzelnen Lösungsmittelklassen sind Heptan, Toluol, Dichlorbenzol, Methylenchlorid, Tetrahydrofuran oder Triethylamin.

Bevorzugt werden bei dem erfindungsgemäßen Aufreinigungsverfahren Metallocene der Formeln (Ia) und (IIa), also racemische Metallocendichloride, eingesetzt, wie sie in EP-A-0485823, EP-A-0549900, EP-A-0576970, WO 98/22486 und WO 98/40331 genannt werden. Diese sind Bestandteil der vorliegenden Beschreibung.

Es können aber auch beliebige Gemische aus dem racemischen Metallocendichlorid der Formel (IIIa) mit dem entsprechenden meso-Metallocendichlorid der Formel (IIIb) bei dem erfindungsgemäßen Aufreinigungsverfahren eingesetzt werden, wobei die Symbole und Indices wie bei Formel (IIa) definiert sind.

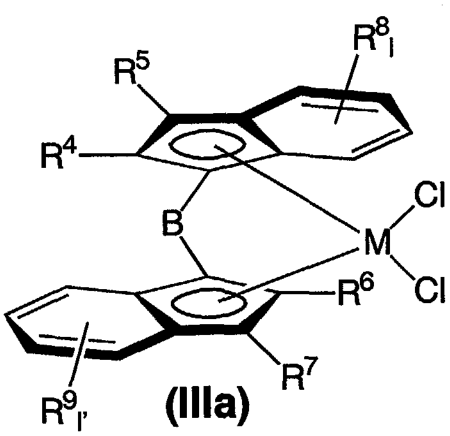

(IIIa)

pseudo-rac

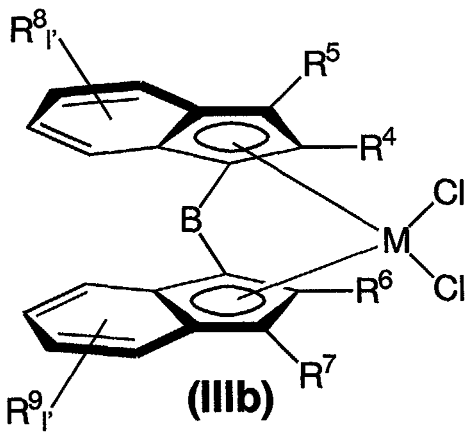

(IIIb)

pseudo-meso

Die in dem erfindungsgemäßen Aufreinigungsverfahren eingesetzten Metallocene der Formeln (Ia) und (IIa), bevorzugt die Metallocene der Formel (IIa), können so eingesetzt werden, wie sie direkt aus der Metallocen-Synthese zusammen mit den anorganischen, metallorganischen und organischen Nebenprodukten entstehen, oder wie sie nach Abtrennung eines Großteils der Nebenprodukte gemäß einem der oben genannten bekannten Aufreinigungsverfahren erhalten werden können.

Erläuternde, jedoch nicht einschränkende Beispiele für die bei dem erfindungsgemäßen Aufreinigungsverfahren einsetzbaren Metallocene der Formel (Ia) oder (IIa) sind:

Dimethylsilandiylbis(indenyl)-zirkoniumdichlorid
Dimethylsilandiylbis(2-methyl-indenyl)-zirkoniumdichlorid
Methylidenbis(2-methyl-indenyl)-zirkoniumdichlorid

Isopropylidenbis(2-methyl-indenyl)-zirkoniumdichlorid
Dimethylsilandiylbis(2-methyl-benzo-indenyl)-zirkoniumdichlorid
Dimethylsilandiylbis(4-naphthyl-indenyl)-zirkoniumdichlorid
Dimethylsilandiylbis(2-methyl-4-(1-naphthyl)-indenyl)-zirkoniumdichlorid
Methylidenbis(2-methyl-4-(1-naphthyl)-indenyl)-zirkoniumdichlorid
Isopropylidenbis(2-methyl-4-(1-naphthyl)-indenyl)-zirkoniumdichlorid
Dimethylsilandiylbis(2-methyl-4-(2-naphthyl)-indenyl)-zirkoniumdichlorid
Dimethylsilandiylbis(2-methyl-4-phenyl-indenyl)-zirkoniumdichlorid
Methylidenbis(2-methyl-4-phenyl-indenyl)-zirkoniumdichlorid
Isopropylidenbis(2-methyl-4-phenyl-indenyl)-zirkoniumdichlorid
Dimethylsilandiylbis(2-methyl-4-t-butyl-indenyl)-zirkoniumdichlorid
Dimethylsilandiylbis(2-methyl-4-isopropyl-indenyl)-zirkoniumdichlorid
Dimethylsilandiylbis(2-methyl-4-ethyl-indenyl)-zirkoniumdichlorid
Dimethylsilandiylbis(2,4-dimethyl-indenyl)-zirkoniumdichlorid
Dimethylsilandiylbis(2-ethyl-indenyl)-zirkoniumdichlorid
Dimethylsilandiylbis(2-ethyl-4-ethyl-indenyl)-zirkoniumdichlorid
Dimethylsilandiylbis(2-ethyl-4-phenyl-indenyl)-zirkoniumdichlorid
Dimethylsilandiybis(2-methyl-4,5-benzo-indenyl)-zirkoniumdichlorid
Methylidenbis(2-methyl-4,5-benzo-indenyl)-zirkoniumdichlorid
Isopropylidenbis(2-methyl-4,5-benzo-indenyl)-zirkoniumdichlorid
Dimethylsilandiylbis(2-methyl-4,6 diisopropyl-indenyl)-zirkoniumdichlorid
Dimethylsilandiylbis(2-methyl-4,5 diisopropyl-indenyl)-zirkoniumdichlorid
Dimethylsilandiylbis(2,4,6-trimethyl-indenyl)-zirkoniumdichlorid
Dimethylsilandiylbis(2,5,6-trimethyl-indenyl)-zirkoniumdichlorid
Dimethylsilandiylbis(2,4,7-trimethyl-indenyl)-zirkoniumdichlorid
Dimethylsilandiylbis(2-methyl-5-isobutyl-indenyl)-zirkoniumdichlorid
Dimethylsilandiylbis(2-methyl-5-t-butyl-indenyl)-zirkoniumdichlorid
Methyl(phenyl)silandiylbis(2-methyl-4-phenyl-indenyl)-zirkoniumdichlorid
Methyl(phenyl)silandiylbis(2-methyl-4,6 diisopropyl-indenyl)-zirkoniumdichlorid
Methyl(phenyl)silandiylbis(2-methyl-4-isopropyl-indenyl)-zirkoniumdichlorid
Methyl(phenyl)silandiylbis(2-methyl-4,5-benzo-indenyl)-zirkoniumdichlorid
Methyl(phenyl)silandiylbis(2-methyl-indenyl)-zirkoniumdichlorid
Methyl(phenyl)silandiylbis(2-methyl-5-isobutyl-indenyl)-zirkoniumdichlorid
1,2-Ethandiylbis(2-methyl-4-phenyl-indenyl)-zirkoniumdichlorid
1,4-Butandiylbis(2-methyl-4-phenyl-indenyl)-zirkoniumdichlorid
1,2-Ethandiylbis(2-methyl-4,6 diisopropyl-indenyl)-zirkoniumdichlorid
1,4-Butandiylbis(2-methyl-4-isopropyl-indenyl)-zirkoniumdichlorid
1,4-Butandiylbis(2-methyl-4,5-benzo-indenyl)-zirkoniumdichlorid
1,2-Ethandiylbis(2-methyl-4,5-benzo-indenyl)-zirkoniumdichlorid
1,2-Ethandiylbis(2,4,7-trimethyl-indenyl)-zirkoniumdichlorid
1,2-Ethandiylbis(2-methyl-indenyl)-zirkoniumdichlorid
1,4-Butandiylbis(2-methyl-indenyl)-zirkoniumdichlorid
[4- ($\eta^5$-Cyclopentadienyl) -4,6,6-trimethyl-($\eta^5$-4,5-tetrahydropentalen)]- zirkoniumdichlorid
[4-($\eta^5$-3'-Trimethylsilyl-cyclopentadienyl)-4,6,6-trimethyl-($\eta^5$-4,5-tetrahydropentalen)]-zirkoniumdichlorid
[4-($\eta^5$-3'-Isopropyl-cyclopentadienyl)-4,6, 6-trimethyl-($\eta^5$-4,5,-tetrahydropentalen)]- zirkoniumdichlorid
[4-($\eta^5$-cyclopentadienyl)-4,7,7-trimethyl-($\eta^5$-4,5,6,7-tetrahydroindenyl)]- zirkoniumdichlorid
[4-($\eta^5$-3'-tert.Butyl-cyclopentadienyl)-4,7,7-trimethyl-($\eta^5$-4,5,6,7-tetrahydroindenyl)]- zirkoniumdichlorid
4-($\eta^5$-3'-Methylcyclopentadienyl)-4,7,7-trimethyl-(5-4,5,6,7-tetrahydroindenyl)]- zirkoniumdichlorid
4-($\eta^5$-3'-Trimethylsilyl-cyclopentadienyl)-2-trimethylsilyl-4,7,7-trimethyl-($\eta^5$-4,5,6,7-tetrahydroindenyl)]- zirkoniumdichlorid
Dimethylsilandiylbis(tetrahydroindenyl)-zirkoniumdichlorid
Isopropyliden-bisindenyl-zirkoniumdichlorid
Isopropyliden-cyclopentadienyl-9-fluorenyl-zirkoniumdichlorid
Isopropyliden-cyclopentadienyl-indenyl-zirkoniumdichlorid
Diphenylmethyliden-(cyclopentadienyl)-(9-fluorenyl)-zirkoniumdichlorid
Diphenylmethyliden-(3-methyl-cyclopentadienyl)-(9-fluorenyl)-zirkoniumdichlorid
Diphenylmethyliden-(3-isopropyl-cyclopentadienyl)-(9-fluorenyl)-zirkoniumdichlorid
Diphenylmethyliden-(3-tert.-butyl-cyclopentadienyl)-(9-fluorenyl)-zirkoniumdichlorid

Dimethylsilandiyl-cyclopentadienyl-9-fluorenyl-zirkoniumdichlorid
Diphenylsilandiyl-cyclopentadienyl-9-fluorenyl-zirkoniumdichlorid
Dimethylsilandiylbis(2-methyl-4-(tert-butyl-phenyl-indenyl)-zirkoniumdichlorid
Dimethylsilandiylbis(2-methyl-4-(4-trifluormethyl-phenyl-indenyl)-zirkoniumdichlorid
Dimethylsilandiylbis(2-methyl-4-(4-methoxy-phenyl-indenyl)-zirkoniumdichlorid
Dimethylsilandiylbis(2-ethyl-4-(4-methyl-phenyl-indenyl)-zirkoniumdichlorid
Dimethylsilandiylbis(2-ethyl-4-(4-ethyl-phenyl-indenyl)-zirkoniumdichlorid
Dimethylsilandiylbis(2-ethyl-4-(4-trifluormethyl-phenyl-indenyl)-zirkoniumdichlorid
Dimethylsilandiylbis(2-ethyl-4-(4-methoxy-phenyl-indenyl)-zirkoniumdichiorid
Dimethylsilandiylbis(2-methyl-4-(4'-tert.-butyl-phenyl)-indenyl)-zirkoniumdichlorid
Dimethylsilandiylbis(2-methyl-4-(3',5'-di-tert.-butyl-phenyl)-indenyl)-zirkoniumdichlorid
Methylidenbis(2-methyl-4-(4'-tert.-butyl-phenyl)-indenyl)-zirkoniumdichlorid
Isopropylidenbis(2-methyl-4-(4'-tert.-butyl-phenyl)-indenyl)-zirkoniumdichlorid
Dimethylsilandiylbis(2-methyl-4-(4'-methyl-phenyl)-indenyl)-zirkoniumdichlorid
Dimethylsilandiylbis(2-methyl-4-(4'-ethyl-phenyl)-indenyl)-zirkoniumdichlorid
Dimethylsilandiylbis(2-methyl-4-(4'-n-propyl-phenyl)-indenyl)-zirkoniumdichlorid
Dimethylsilandiylbis(2-methyl-4-(4'-iso-propyl-phenyl)-indenyl)-zirkoniumdichlorid
Dimethylsilandiylbis(2-methyl-4-(4'-n-butyl-phenyl)-indenyl)-zirkoniumdichlorid
Dimethylsilandiylbis(2-methyl-4-(4'-hexyl-phenyl)-indenyl)-zirkoniumdichlorid
Dimethylsilandiylbis(2-methyl-4-(4'-sec-butyl-phenyl)-indenyl)-zirkoniumdichlorid
Dimethylsilandiylbis(2-ethyl-4-phenyl)-indenyl)-zirkoniumdichlorid
Dimethylsilandiylbis(2-ethyl-4-(4'-methyl-phenyl)-indenyl)-zirkoniumdichlorid
Dimethylsilandiylbis(2-ethyl-4-(4'-ethyl-phenyl)-indenyl)-zirkoniumdichlorid
Dimethylsilandiylbis(2-ethyl-4-(4'-n-propyl-phenyl)-indenyl)-zirkoniumdichlorid
Dimethylsilandiylbis(2-ethyl-4-(4'-iso-propyl-phenyl)-indenyl)-zirkoniumdichlorid
Dimethylsilandiylbis(2-ethyl-4-(4'-n-butyl-phenyl)-indenyl)-zirkoniumdichlorid
Dimethylsilandiylbis(2-ethyl-4-(4'-hexyl-phenyl)-indenyl)-zirkoniumdichlorid
Dimethylsilandiylbis(2-ethyl-4-(4'-pentyl-phenyl)-indenyl)-zirkoniumdichlorid
Dimethylsilandiylbis(2-ethyl-4-(4'-cyclohexyl-phenyl)-indenyl)-zirkoniumdichlorid
Dimethylsilandiylbis(2-ethyl-4-(4'-sec-butyl-phenyl)-indenyl)-zirkoniumdichlorid
Dimethylsilandiylbis(2-ethyl-4-(4'-tert.-butyl-phenyl)-indenyl)-zirkoniumdichlorid
Dimethylsilandiylbis(2-ethyl-4-(3',5'-di-tert.-butyl-phenyl)-indenyl)-zirkoniumdichlorid
Methylidenbis(2-ethyl-4-(4'-tert.-butyl-phenyl)-indenyl)-zirkoniumdichlorid
Isopropylidenbis(2-ethyl-4-(4'-tert.-butyl-phenyl)-indenyl)-zirkoniumdichlorid
Dimethylsilandiylbis(2-n-propyl-4-phenyl)-indenyl)-zirkoniumdichlorid
Dimethylsilandiylbis(2-n-propyl-4-(4'-methyl-phenyl)-indenyl)-zirkoniumdichlorid
Dimethylsilandiylbis(2-n-propyl-4-(4'-ethyl-phenyl)-indenyl)-zirkoniumdichlorid
Dimethylsilandiylbis(2-n-propyl-4-(4'-n-propyl-phenyl)-indenyl)-zirkoniumdichlorid
Dimethylsilandiylbis(2-n-propyl-4-(4'-iso-propyl-phenyl)-indenyl)-zirkoniumdichlorid
Dimethylsilandiylbis(2-n-propyl-4-(4'-n-butyl-phenyl)-indenyl)-zirkoniumdichlorid
Dimethylsilandiylbis(2-n-propyl-4-(4'-hexyl-phenyl)-indenyl)-zirkoniumdichlorid
Dimethylsilandiylbis(2-n-propyl-4-(4'-cyclohexyl-phenyl)-indenyl)-zirkoniumdichlorid
Dimethylsilandiylbis(2-n-propyl-4-(4'-sec-butyl-phenyl)-indenyl)-zirkoniumdichlorid
Dimethylsilandiylbis(2-n-propyl-4-(4'-tert.-butyl-phenyl)-indenyl)-zirkoniumdichlorid
Dimethylsilandiylbis(2-n-propyl-4-(3',5'-di-tert.-butyl-phenyl)-indenyl)-zirkoniumdichlorid
Methylidenbis(2-n-propyl-4-(4'-tert.-butyl-phenyl)-indenyl)-zirkoniumdichlorid
Isopropylidenbis(2-n-propyl-4-(4'-tert.-butyl-phenyl)-indenyl)-zirkoniumdichlorid
Dimethylsilandiylbis(2-n-butyl-4-phenyl)-indenyl)-zirkoniumdichlorid
Dimethylsilandiylbis(2-n-butyl-4-(4'-methyl-phenyl)-indenyl)-zirkoniumdichlorid
Dimethylsilandiylbis(2-n-butyl-4-(4'-ethyl-phenyl)-indenyl)-zirkoniumdichlorid
Dimethylsilandiylbis(2-n-butyl-4-(4'-n-propyl-phenyl)-indenyl)-zirkoniumdichlorid
Dimethylsilandiylbis(2-n-butyl-4-(4'-iso-propyl-phenyl)-indenyl)-zirkoniumdichlorid
Dimethylsilandiylbis(2-n-butyl-4-(4'-n-butyl-phenyl)-indenyl)-zirkoniumdichlorid
Dimethylsilandiylbis(2-n-butyl-4-(4'-hexyl-phenyl)-indenyl)-zirkoniumdichlorid
Dimethylsilandiylbis(2-n-butyl-4-(4'-cyclohexyl-phenyl)-indenyl)-zirkoniumdichlorid
Dimethylsilandiylbis(2-n-butyl-4-(4'-sec-butyl-phenyl)-indenyl)-zirkoniumdichlorid
Dimethylsilandiylbis(2-n-butyl-4-(4'-tert.-butyl-phenyl)-indenyl)-zirkoniumdichlorid
Dimethylsilandiylbis(2-hexyl-4-phenyl)-indenyl)zirkoniumdichlorid Dimethylsilandiylbis(2-hexyl-4-(4'-methyl-phenyl)-indenyl)-zirkoniumdichlorid
Dimethylsilandiylbis(2-hexyl-4-(4'-ethyl-phenyl)-indenyl)-zirkoniumdichlorid
Dimethylsilandiylbis(2-hexyl-4-(4'-n-propyl-phenyl)-indenyl)-zirkoniumdichlorid
Dimethylsilandiylbis(2-hexyl-4-(4'-iso-propyl-phenyl)-indenyl)-zirkoniumdichlorid
Dimethylsilandiylbis(2-hexyl-4-(4'-n-butyl-phenyl)-indenyl)-zirkoniumdichlorid
Dimethylsilandiylbis(2-hexyl-4-(4'-hexyl-phenyl)-indenyl)-zirkoniumdichlorid
Dimethylsilandiylbis(2-hexyl-4-(4'-cyclohexyl-phenyl)-indenyl)-zirkoniumdichlorid
Dimethylsilandiylbis(2-hexyl-4-(4'-sec-butyl-phenyl)-indenyl)-zirkoniumdichlorid
Dimethylsilandiylbis(2-hexyl-4-(4'-tert.-butyl-phenyl)-indenyl)-zirkoniumdichlorid
Dimethylgermandiylbis(2-ethyl-4-(4'-tert.-butyl-phenyl)-indenyl)-zirkoniumdichlorid
Dimethylgermandiylbis(2-methyl-4-(4'-tert.-butyl-phenyl)-indenyl)- zirkoniumdichlorid
Ethylidenbis(2-ethyl-4-phenyl)-indenyl)-zirkoniumdichlorid
Ethylidenbis(2-ethyl-4-(4'-tert.-butyl-phenyl)-indenyl)-zirkoniumdichlorid
Ethylidenbis(2-n-propyl-4-(4'-tert.-butyl-phenyl)-indenyl)-zirkoniumdichlorid
Ethylidenbis(2-methyl-4-(4'-tert.-butyl-phenyl)-indenyl)-zirkoniumdichlorid
Methylethylidenbis(2-ethyl-4-(4'-tert.-butyl-phenyl)-indenyl)-zirkoniumdichlorid
Dimethylsilandiyl(2-methylazapentalen)(2-methyl-indenyl)-zirkoniumdichlorid
Dimethylsilandiyl(2-methylazapentalen)(2-methyl-4-phenyl-indenyl) -zirkoniumdichlorid
Dimethylsilandiyl(2-methylazapentalen)(2-methyl-4,5-benzoindenyl)
-zirkoniumdichlorid
Dimethylsilandiyl(2-methylazapentalen)(2-ethyl-4-(4'-tert-butylphenyl-indenyl)-zirkoniumdichlorid
Dimethylsilandiyl(2-methylazapentalen)(2-methyl-4-(4'-tert.-butyl-phenyl)-indenyl)-zirkoniumdichlorid
Dimethylsilandiyl(2-methylazapentalen)(2-n-propyl-4-(4'-tert.-butyl-phenyl)-indenyl)-zirkoniumdichlorid
Dimethylsilandiyl(2-ethylazapentalen)(2-methyl-4-phenyl-indenyl) -zirkoniumdichlorid
Dimethylsilandiyl(2-ethylazapentalen)(2-methyl-4-phenyl-indenyl)-zirkoniumdichlorid
Dimethylsilandiyl(2-ethylazapentalen)(2-methyl-4,5-benzo-indenyl) -zirkoniumdichlorid
Dimethylsilandiyl(2-ethylazapentalen)(2-ethyl-4-(4'-tert-butylphenyl-indenyl)-zirkoniumdichlorid
Dimethylsilandiyl(2-ethylazapentalen)(2-methyl-4-(4'-tert.-butylphenyl)-indenyl)-zirkoniumdichlorid
Dimethylsilandiyl(2-ethylazapentalen)(2-n-propyl-4-(4'-tert.butyl-phenyl)-indenyl)-zirkoniumdichlorid
Dimethylsilandiyl(2-methylthiapentalen)(2-methyl-indenyl)-zirkoniumdichlorid
Dimethylsilandiyl(2-methylthiapentalen)(2-methyl-4-phenyl-indenyl)
-zirkoniumdichlorid
Dimethylsilandiyl(2-methylthiapentalen)(2-methyl-4,5-benzo-indenyl)
-zirkoniumdichlorid
Dimethylsilandiyl(2-methylthiapentalen)(2-ethyl-4-(4'-tert.butyl-phenyl)-indenyl)-zirkoniumdichlorid
Dimethylsilandiyl(2-methylthiapentalen)(2-n-propyl-4-(4'-tert.butyl-phenyl)-indenyl)-zirkoniumdichlorid
Dimethylsilandiyl(2-ethylthiapentalen)(2-methyl-indenyl)-zirkoniumdichlorid
Dimethylsilandiyl(2-ethylthiapentalen)(2-methyl-4-phenyl-indenyl)-zirkoniumdichlorid
Dimethylsilandiyl(2-ethylthiapentalen)(2-methyl-4,5-benzo-indenyl)-zirkoniumdichlorid
Dimethylsilandiyl(2-ethylthiapentalen)(2-ethyl-4-(4'-tert.-butylphenyl)-indenyl)-zirkoniumdichlorid
Dimethylsilandiyl(2-ethylthiapentalen)(2-n-propyl-4-(4'-tert.butyl-phenyl)-indenyl)-zirkoniumdichlorid

Bei dem erfindungsgemäßen Aufreinigungsverfahren wird mindestens ein Metallocenhalogenid der Formel (Ia) oder (IIa) mit mindestens einer Ligandaustauschkomponente $M^1YR^3$ umgesetzt, wobei die Metallocene der Formel (I) oder (II) entstehen. Dabei dient die Ligandaustauschkomponente zur Einführung des Liganden Y-$R^3$. Die Metallocene der Formel (I) und (II) lassen sich auf Grund ihrer guten Löslichkeit mit guten Raum-Zeit-Ausbeuten durch Kristallisation in der benötigten Qualität gewinnen. Die bei dem Ligandaustausch entstehenden Salze lassen sich beispielsweise durch bekannte Filtrationstechniken entfernen.

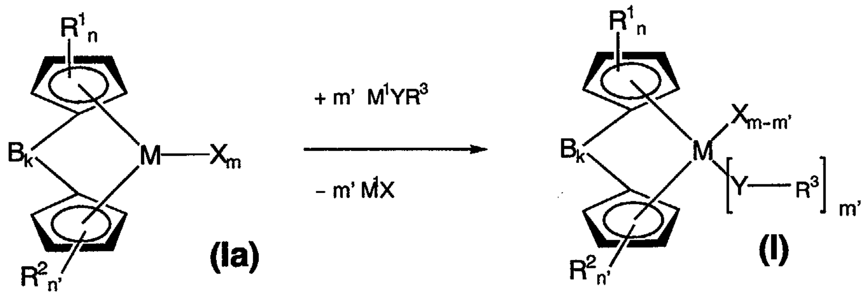


(Ia) (I)

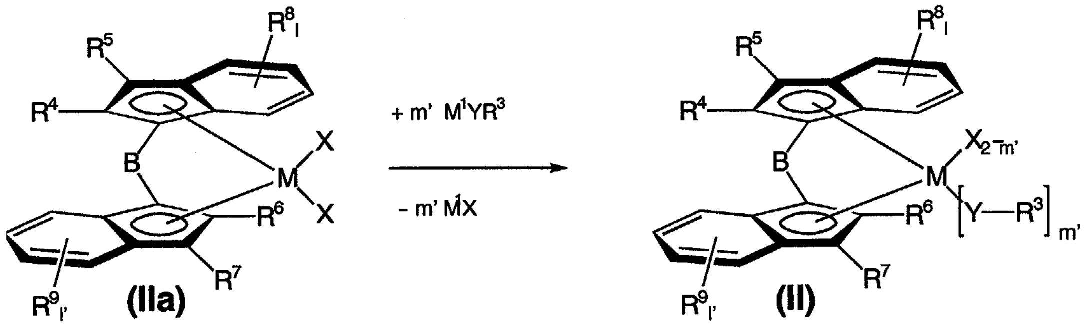


(IIa) (II)

Dabei ist $M^1$ gleich einem Kation oder Kationfragment wie beispielsweise Li, Na, K, MgCl, MgBr, MgI oder das mit einem Amin korrespondierende Ammoniumkation, und die übrigen Reste sind wie oben definiert.

Der Austausch der Halogenidliganden in Metallocenhalogeniden durch andere Liganden ist im Prinzip bekannt. Insbesondere der Austausch von Chloridliganden durch andere Anionen, die als Liganden am Zirkonocen dienen können, ist beschrieben worden (z. B.: Austausch Chlorid gegen Aryloxid: T. Repo et al., J. Organomet. Chem. 541 (1997), 363 und dort zitierte Literatur; B. Khera et al., Polyhedron 3 (5), (1984), 611 und dort zitierte Literatur; B. Khera et al., Polyhedron 2 (11), (1983), 1177; Austausch Chlorid gegen Alkyl oder Aryl: E.W. Abel, F.G. Stone, G. Wilkinson, Comprehensive Organometallic Chemistry II, Volume 4, Elsevier Science Ltd., S. 573, 575, 577; Austausch Chlorid gegen Carboxylat: E.W. Abel, F.G. Stone, G. Wilkinson, Comprehensive Organometallic Chemistry II, Volume 4, Elsevier Science Ltd., S. 525; Austausch Chlorid gegen verschiedene weitere Anionen: E.W. Abel, F.G. Stone, G. Wilkinson, Comprehensive Organometallic Chemistry II, Volume 4, Elsevier Science Ltd., Kapitel 5, 10 und 11)

Bei dem erfindungsgemäßen Aufreinigungsverfahren werden zunächst Metallocenhalogenide mit Salzen der Formel $M^1$-Y-$R^3$ in einen inerten Lösungsmittel oder Lösungsmittelgemisch in einem Temperaturbereich von 0°C bis +200°C umgesetzt, bevorzugt in einem Temperaturbereich von 40°C bis 140°C, besonders bevorzugt bei einer Temperatur zwischen 60°C und 110°C.

Die bei dem erfindungsgemäßen Aufreinigungsverfahren eingesetzte Verbindung $M^1$-Y-$R^3$ läßt sich beispielsweise durch Deprotonierung der aciden Verbindung

H-Y-$R^3$ mit einer geeigneten Base, wie zum Beispiel Butyllithium, Methyllithium, Natriumhydrid, Kaliumhydrid, Natrium, Kalium, Grignardverbindungen oder auch Aminen in einem inerten Lösungsmittel oder Lösungsmittelgemisch herstellen, oder $M^1$-Y-$R^3$ ist ein kommerziell erhältliches Metallorganyl wie ein Lithiumorganyl, zum Beispiel Methyllithium, ein Aluminiumorganyl, wie zum Beispiel Trimethylaluminium, oder eine Grignardverbindung, wie zum Beispiel Benzylmagnesiumchlorid.

Nichteinschränkende Beispiele für geeignete Lösungsmittel sind Kohlenwasserstoffe, die halogeniert sein können, wie Benzol, Toluol, Xylol, Mesitylen, Ethylbenzol, Chlorbenzol, Dichlorbenzol, Fluorbenzol, Dekalin, Tetralin, Pentan, Hexan, Cyclohexan, Ether wie Diethylether, Di-n-Butylether, tert.-Butyl-methylether (MTBE), Tetrahydrofuran (THF), 1,2-Dimethoxyethan (DME), Anisol, Triglyme, Dioxan, Amide wie Dimethylformamid (DMF), Dimethylacetamid, N-Methyl-2-pyrrolidinon (NMP), Sulfoxide wie Dimethylsulfoxid (DMSO), Phosphoramide wie Hexamethylphosphorsäuretriamid, Harnstoff-Derivate wie 1,3-Dimethyltetrahydro-2(1H)-pyrimidinon, Ketone wie Aceton, Ethylmethylketon, Ester wie Essigsäureethylester, Nitrile wie Acetonitril sowie beliebige Gemische aus jenen Stoffen. Bevorzugt werden Lösungsmittel oder Lösungsmittelgemische in denen ebenfalls direkt die anschließende Umsetzung mit dem Metallocendichlorid durchgeführt werden kann. Nichteinschränkende Beispiele hierfür sind Toluol, Hexan, Heptan, Xylol, Tetrahydrofuran (THF), Dimethoxyethan (DME), Toluol/THF, Heptan/DME oder Toluol/DME.

Bei den Verbindungen des Typs H-Y-$R^3$ handelt es sich beispielsweise um die Stoffklassen der Alkohole, der Phenole, der Carbonsäuren, der Alkyl- und Arylsulfonsäuren,der primären und sekundären Amine, der primären und

sekundären Aniline, der Carbonsäure amide, der Sulfonsäureamide, der Dialkyl- oder Diarylphosphine und der Dialkyl- oder Diarylphosphinoxide. Beispiele für CHacide, enolisierbare Verbindungen H-Y-$R^3$ sind Malonsäureester, Cyanessigester, Acetessigester, 1,3-Diketone, enolisierbare Ester und enolisierbare Ketone.

Bevorzugt enthalten Verbindungen des Typs H-Y-$R^3$ nur eine funktionelle Gruppe H-Y und der Rest $R^3$ ist wie oben beschrieben definiert.

Erläuternde, jedoch nicht einschränkende Beispiele für die erfindungsgemäß einsetzbaren Verbindungen der Formel H-Y-$R^3$ sind:

2,4-Di-tert.-butyl-phenol; 2,6-Di-tert.-butyl-phenol; 3,5-Ditert.-butyl-phenol; 2,6-Di-sec.-butyl-phenol; 2,4-Dimethylphenol; 2,3-Dimethylphenol; 2,5-Dimethylphenol; 2,6-Dimethylphenol; 3,4-Dimethylphenol; 3,5-Dimethylphenol; Phenol; 2-Methylphenol; 3-Methylphenol; 4-Methylphenol; 2-Ethylphenol; 3-Ethylphenol; 4-Ethylphenol; 2-sec.-Butylphenol; 2-tert.-Butylphenol; 3-tert.-Butylphenol; 4-sec.-Butylphenol; 4-tert.-Butylphenol; 2-Isopropyl-5-methylphenol; 4-Isopropyl-3-methylphenol; 5-Isopropyl-2-methylphenol; 5-Isopropyl-3-methylphenol; 2,4-Bis-(2-methyl-2-butyl)-phenol; 2,6-Di-tert.-butyl-4-methylphenol; 4-Nonylphenol;

2-Isopropylphenol; 3-Isopropylphenol; 4-Isopropylphenol; 2-Propylphenol; 4-Propylphenol; 2,3,5-Trimethylphenol; 2,3,6-Trimethylphenol; 2,4,6-Trimethylphenol; 3,4,5-Trimethylphenol; 2-tert.-Butyl-4-methylphenol; 2-tert.-Butyl-5-methylphenol; 2-tert.-Butyl-6-methylphenol; 4-(2-Methyl-2-butyl)-phenol; 2-tert.-Butyl-4-ethylphenol; 2,6-Diisopropylphenol; 4-Octylphenol; 4-(1,1,3,3-Tetramethylbutyl)-phenol; 2,6-Di-tert.-butyl-4-ethylphenol; 4-sec.-Butyl-2,6-di-tert.-butylphenol; 4-Dodecylphenol; 2,4,6-Tri-tert.-butylphenol; 3-(Pentadecyl)-phenol; 2-Methyl-1-naphthol;

1-Naphthol; 2-Naphthol; 1-Acenaphthenol; 2-Hydroxybiphenyl; 3-Hydroxybiphenyl; 4-Hydroxybiphenyl; Hydroxypyridine; Hydroxychinoline; 2-Hydroxycarbazol; Hydroxychinaldine; 8-Hydroxychinazolin; 2-Hydroxychinoxalin; 2-Hydroxydibenzofuran; 2-Hydroxydiphenylmethan, 1-Hydroxyisochinoline, 5,6,7,8-Tetrahydro-1-naphthol; Methanol; Ethanol; Propanol; Isopropanol; Butanol; tert-Butanol; Isobutanol; 2-Butanol; Hexanol; Cyclohexanol; Octadecanol; Benzylalkohol; 2-Methylbenzylalkohol; 3-Methylbenzylalkohol; 4-Methylbenzylalkohol; Anilin; N-Methylanilin; o-Toluidin; 2,3-Dimethylanilin; 2,4-Dimethylanilin; 2,5-Dimethylanilin; 2, 6-Dimethylanilin; N-Ethylanilin; 2-Ethylanilin; N-Ethyl-o-toluidin; N-Ethylm-toluidin; 2-Isopropylanilin; 2-Propylanilin; 2,4,6-Trimethylanilin; 2-tert. -Butylanilin; 2,3-Dimethyl-N-ethylanilin; Isopropylamin; tert.-Butylamin; Diethylamin; N-Methylisopropylamin; N-Ethylisopropylamin; Diisopropylamin; N-Methyl-tert.-butyl-amin; N-Benzylmethylamin; 2-Methylbenzylamin; 3-Methylbenzylamin; 4-Methylbenzylamin; 1-Phenylethylamin; 2-Phenylethylamin; Essigsäure; Propionsäure; Buttersäure; Phenylessigsäure; Benzoesäure; Tolylsäure; Dimethylbenzoesäure; 4-tert.-Butylbenzoesäure; Methansulfonsäure; Trifluormethansulfonsäure; p-Toluolsulfonsäure; N-Methylacetamid; N-Methylpropionsäureamid; Benzamid; Diphenylphosphin; Malonsäuredimethylester; Malonsäurediethylester; Methylmalonsäuredimethylester; Methylmalonsäurediethylester; Ethylmalonsäurediethylester; Acetessigsäuremethylester; Acetessigsäureethylester; 2-Ethyl-acetessigsäureethylester; 1,3-Pentandion; Dibenzoylmethan; Phenylessigsäuremethylester; Isobuttersäuremethylester; Acetophenon; tert.-Butylmethylketon und Phenylaceton.

Das molare Verhältnis von Reagenz $M^1$-Y-$R^3$ zum Metallocenhalogenid, insbesondere zum Metallocendichlorid (z. B. der Formel III) liegt im allgemeinen zwischen 5 : 1 bis 0.8 : 1 bevorzugt zwischen 2.5 : 1 bis 0.9 : 1.

Die Konzentration an Metallocendichlorid (z. B. der Formel IIa) bzw. an Reagenz $M^1$-Y-$R^3$ in der Reaktionsmischung liegt im allgemeinen im Bereich zwischen 0,001 mol/1 und 8 mol/1, bevorzugt im Bereich zwischen 0,01 und 3 mol/1, besonders bevorzugt im Bereich zwischen 0,05 mol/1 und 2 mol/1.

Die Dauer der Umsetzung des Metallocendichlorids (z. B. der Formel IIa) mit dem Reagenz $M^1$-Y-$R^3$ liegt im allgemeinen im Bereich zwischen 5 Minuten und 1 Woche, bevorzugt im Bereich zwischen 15 Minuten und 48 Stunden.

Nach Umwandlung der Metallocene der Formeln (Ia) und (IIa) in die Metallocene der Formeln (I) und (II), werden vor dem Auskristallisieren der neuen Metallocene bevorzugt unlösliche Bestandteile wie zum Beispiel die gebildeten Salze oder Metalloxyhalogenide abgetrennt. Bevorzugt wird dazu eine Lösung oder Suspension der neuen Metallocene in dem inerten Lösungsmittel oder Lösungsmittelgemisch, das schon bei der Ligandaustauschreaktion eingesetzt wurde, filtriert und extrahiert. Bevorzugt wird die Umkristallisation in aprotischen Kohlenwasserstoffen, insbesondere polaren, aprotischen Kohlenwasserstoffen, durchgeführt. Besonders bevorzugt sind Toluol, Hexan, Heptan, Xylol, Tetrahydrofuran (THF), Dimethoxyethan (DME), Toluol/THF, Heptan/DME oder Toluol/DME.

Das bei der Extraktion eingesetzte Lösungsmittel bzw. Lösungsmittelgemisch hat eine Temperatur zwischen 20°C und der Siedetemperatur des Lösungsmittels bzw. des Lösungsmittelgemisches. Bevorzugt wird bei der Extraktion in einem Temperaturbereich 0-20°C unterhalb der Siedetemperatur gearbeitet.

Die so gewonnene Lösung des neuen Metallocens wird eventuell eingeengt, und anschließend kristallisiert das neue Metallocen aus. Die Kristallisation wird im Temperaturbereich von -78°C bis 200°C durchgeführt, bevorzugt im Bereich von -30°C bis 110°C, besonders bevorzugt im Bereich von -15°C bis 30° C.

Das durch Kristallisation anfallende aufgereinigte Metallocen kann wiederum durch Filtrationstechniken von der Mutterlauge isoliert werden.

Mit Hilfe des erfindungsgemäßen Verfahrens kann in vorhandenen Apparaturen mindestens doppelt soviel Metallocen aufgereinigt werden wie bisher. In bevorzugten Ausführungsformen wird dieser Faktor noch deutlich übertroffen, so daß kostspielige Kapazitätserweiterungen vermieden werden können.

Die bei dem erfindungsgemäßen Aufreinigungsverfahren erhältlichen Metallocene der Formeln I und II sind hochaktive Katalysatorkomponenten für die Olefinpolymerisation. Je nach Substitutionsmuster der Liganden können die Metallocene als Isomerengemisch anfallen. Die Metallocene werden für die Polymerisation bevorzugt isomerenrein eingesetzt.

Bevorzugt werden die pseudo-rac isomeren Metallocene der Formel II eingesetzt.

Die bei dem erfindungsgemäßen Aufreinigungsverfahren erhältlichen Metallocene der Formeln I und II eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallocen enthält. Unter dem Begriff Polymerisation wird eine Homopolymerisation wie auch eine Copolymerisation verstanden.

Die bei dem erfindungsgemäßen Aufreinigungsverfahren erhältlichen Metallocene der Formeln I und II, insbesondere der Formel II, können zur Polymerisation eines oder mehrerer Olefine der Formel $R^{\alpha}$-CH=CH-$R^{\beta}$ verwendet werden, worin $R^{\alpha}$ und $R^{\beta}$ gleich oder verschieden sind und ein Wasserstoffatom oder einen Kohlenwasserstoff mit 1 bis 20 C-Atomen, insbesondere 1 bis 10 C-Atomen, bedeuten, und $R^{\alpha}$ und $R^{\beta}$ zusammen mit den sie verbindenden Atomen einen oder mehrere Ringe bilden können. Beispiele für solche Olefine sind 1-Olefine mit 2 - 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden Ethylen oder Propylen homopolymerisiert, oder Ethylen mit einem oder mehreren cyclischen Olefinen, wie Norbornen , und/oder einem oder mehreren Dienen mit 4 bis 20 C-Atomen, wie 1,3-Butadien oder 1,4-Hexadien, copolymerisiert. Beispiele solcher Copolymere sind Ethylen/ Norbornen-Copolymere, Ethylen/ Propylen-Copolymere und Ethylen/Propylen/1,4-Hexadien-Copolymere.

Die bei dem erfindungsgemäßen Aufreinigungsverfahren erhaltenen Metallocene der Formeln I und II, zeigen gegenüber den Dihalogen-Verbindungen zumindest gleichwertige, zum Teil jedoch höhere Aktivitäten in der Polymerisation von Olefinen, und die erhaltenen Polyolefine zeigen eine Verminderung der unerwünschten niedermolekularen extrahierbaren Anteile.

Die Polymerisation wird bei einer Temperatur von - 60 bis 300 °C , bevorzugt 50 bis 200 °C, ganz besonders bevorzugt 50 - 80 °C durchgeführt. Der Druck beträgt 0,5 bis 2000 bar, bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungform ist die Gasphasen- und Massepolymerisation.

Bevorzugt enthält der eingesetzte Katalysator eine der bei dem erfindungsgemäßen Aufreinigungsverfahren erhältlichen Metallocenverbindungen. Es können auch Mischungen zweier oder mehrerer Metallocenverbindungen eingesetzt werden, z. B. zur Herstellung von Polyolefinen mit breiter oder multimodaler Molmassenverteilung.

Der Cokatalysator, der zusammen mit einem bei dem erfindungsgemäßen Aufreinigungsverfahren erhältlichen Metallocene der Formeln I und II das Katalysatorsystem bildet, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel (VII)

$$(R\ AlO)_n \qquad (VII)$$

verwendet.

Weitere geeignete Aluminoxane können z.B. cyclisch wie in Formel (VI)

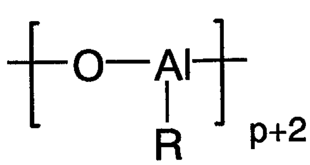

(VI)

oder linear wie in Formel (IV)

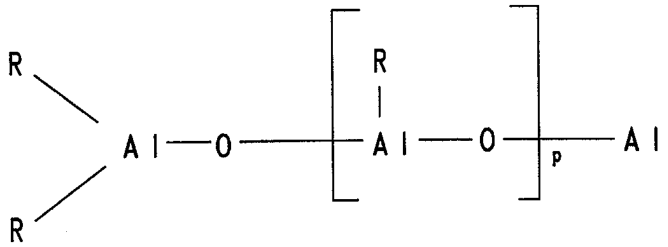

(IV)

oder vom Cluster-Typ wie in Formel (V)

sein. Derartige Aluminoxane werden beispielsweise in JACS 117 (1995), 6465-74, Organometallics 13 (1994), 2957-2969, beschrieben.

Die Reste R in den Formeln (IV), (V), (VI) und (VII) können gleich oder verschieden sein und eine $C_1$-$C_{20}$-Kohlenwasserstoffgruppe wie eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminium-kohlenwasserstoffverbindung und/oder eine Hydridoaluminium-kohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.

Zur Herstellung eines Aluminoxans mit verschiedenen Alkylgruppen R werden entsprechend der gewünschten Zusammensetzung und Reaktivität zwei verschiedene Aluminiumtrialkyle ($AlR_3$ + $AlR'_3$) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die $C_1$-$C_{20}$-kohlenstoffhaltige Gruppen enthalten, wie verzweigte oder unverzweigte Alkyloder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran,

Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran, $[(C_6F_5)_2BO]_2$Al-Me, $[(C_6F_5)_2BO]_3$Al und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, $SbF_6^-$, $CF_3SO_3^-$ oder $C10_4^-$. Als kationisches Gegenion werden protonierte Lewis-Basen wie z.B. Methylamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen oder das Triphenylcarbenium eingesetzt.

Beispiele für solche ionische Verbindungen sind

Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,

Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.

Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.

7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl) ammonium)nonaborat,
Bis (tri (butyl) ammonium) undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(butyl)ammoniumbis(nonahydrid-1,3-dicarbonnonaborat)cobaltate(III),
Tri(butyl)ammoniumbis(undecahydrid-7,8-dicarbaundecaborat)ferrat(III)

von Bedeutung.

Als weitere Cokatalysatoren, die ungeträgert oder geträgert vorliegen können, sind die in EP-A-0924223, DE-A-19622207, EP-A-0601830, EP-A-0824112, EP-A-0824113, WO 99/06414, EP-A-0811627 und DE-A-19804970 genannten Verbindungen zu verwenden.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. Polyolefine).

Geeignete anorganische Oxide finden sich in den Gruppen 2,3,4,5,13,14,15 und 16 des Periodensystems der Elemente. Beispiele für als Träger bevorzugte Oxide umfassen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden können, sind z.B. MgO, $ZrO_2$, $TiO_2$ oder $B_2O_3$, um nur einige zu nennen.

Die verwendeten Trägermaterialien weisen eine spezifische Oberfläche im Bereich von 10 bis 1000 $m^2/g$, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 $m^2/g$ , einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 $m^2/g$, einem Porenvolumen im Bereich zwischen 0,8 bis 3,0 ml/g und einer mittleren Partikelgröße von 10 bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der

Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium, Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösungsmittel mit dem Inertisierungsreagenz in reiner Form oder gelöst in einem geeigneten Lösungsmittel zur Reaktion bringt. Geeignete Lösungsmittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösungsmitteln wie sie bereits zuvor beschrieben worden sind gewaschen und anschließend im Inertgasstrom oder im Vakuum getrocknet.

Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösungsmittelresten oder anderen Verunreinigungen durch entsprechende Reinigungs- und Trocknungsoperationen befreit werden.

Das Katalysatorsystem wird hergestellt, indem mindestens ein Metallocen als rac-meso-Isomerengemisch, mindestens ein Cokatalysator und mindestens ein inertisierter Träger gemischt werden.

Zur Darstellung des geträgerten Katalysatorsystems wird mindestens eine der oben beschriebenen bei dem erfindungsgemäßen Aufreinigungsverfahren erhältlichen Metallocen-Komponenten in einem geeigneten Lösungsmittel mit mindestens einer Cokatalysatorkomponente in Kontakt gebracht, wobei bevorzugt ein lösliches Reaktionsprodukt , ein Addukt oder ein Gemisch erhalten wird.

Die so erhaltene Zubereitung wird dann mit dem dehydratisierten oder inertisierten Trägermaterial vermischt, das Lösungsmittel entfernt und das resultierende geträgerte Metallocen-Katalysatorsystem getrocknet, um sicherzustellen, daß das Lösungsmittel vollständig oder zum größten Teil aus den Poren des Trägermaterials entfernt wird. Der geträgerte Katalysator wird als frei fließendes Pulver erhalten.

Ein Verfahren zur Darstellung eines frei fließenden und gegebenenfalls vorpolymerisierten geträgerten Katalysatorsystems umfaßt die folgenden Schritte:

a) Herstellung einer Metallocen/Cokatalysator-Mischung in einem geeigneten Lösungs- oder Suspensionsmittel, wobei die Metallocen-Komponente, erhältlich aus dem erfindungsgemäßen Aufreinigungsverfahren, die zuvor beschriebenen Strukturen besitzt.

b) Aufbringen der Metallocen/Cokatalysatormischung auf einen porösen, bevorzugt anorganischen dehydratisierten Träger

c) Entfernen des Hauptanteils an Lösungsmittel von der resultierenden Mischung

d) Isolierung des geträgerten Katalysatorsystems

e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösungsmittel für die Herstellung der Metallocen/Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Metallocen- und Cokatalysatorkomponenten in dem gewählten Lösungsmittel löslich ist. Beispiele für geeignete Lösungsmittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Aluminoxan und Metallocen können über einen weiten Bereich variiert werden. Bevorzugt wird ein molares Verhältnis von Aluminium zum Übergangsmetall im Metallocen von 10: 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.

Zur Voraktivierung wird das Metallocen in Form eines Feststoffes in einer Lösung des Aluminoxans in einem geeigneten Lösungsmittel aufgelöst. Es ist auch möglich, das Metallocen getrennt in einem geeigneten Lösungsmittel aufzulösen und diese Lösung anschließend mit der Aluminoxan-Lösung zu vereinigen. Bevorzugt wird Toluol verwendet.

Die Voraktivierungszeit beträgt 1 Minute bis 200 Stunden.

Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.

Die voraktivierte Lösung bzw. das Metallocen/Cokatalysator-Gemisch wird anschließend mit einem inerten Trägermaterial, üblicherweise Kieselgel, das in Form eines trockenen Pulvers oder als Suspension in einem der oben genannten Lösungsmittel vorliegt, vereinigt. Bevorzugt wird das Trägermaterial als Pulver eingesetzt. Die Reihenfolge der Zugabe ist dabei beliebig. Die voraktivierte Metallocen-Cokatalysator-Lösung bzw. das Metallocen-Cokatalysatorgemisch kann zum vorgelegten Trägermaterial dosiert, oder aber das Trägermaterial in die vorgelegte Lösung eingetragen werden.

Das Volumen der voraktivierten Lösung bzw. des Metallocen-Cokatalysator-gemisches kann 100 % des Gesamtporenvolumens des eingesetzten Trägermaterials überschreiten oder aber bis zu 100 % des Gesamtporenvolumens betragen.

Die Temperatur, bei der die voraktivierte Lösung bzw. das Metallocen-Cokatalysatorgemisch mit dem Trägermaterial in Kontakt gebracht wird, kann im Bereich zwischen 0 und 100 °C variieren. Niedrigere oder höhere Temperaturen sind aber auch möglich.

Anschließend wird das Lösungsmittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösungsmittels als auch der Anteil in den Poren des Trägermaterials entfernt. Das Entfernen des Lösungsmittels kann in konventioneller Art und Weise unter Anwendung von Vakuum und/oder Spülen mit Inertgas erfolgen. Beim Trocknungsvorgang kann die Mischung erwärmt werden, bis das freie Lösungsmittel entfernt worden ist, was üblicherweise 1 bis 3 Stunden bei einer vorzugsweise gewählten Temperatur zwischen 30 und 60 °C erfordert. Das freie Lösungsmittel ist der sichtbare Anteil an Lösungsmittel in der Mischung. Unter Restlösungsmittel versteht man den Anteil, der in den Poren eingeschlossen ist.

Alternativ zu einer vollständigen Entfernung des Lösungsmittels kann das geträgerte Katalysatorsystem auch nur bis zu einem gewissen Restlösungsmittelgehalt getrocknet werden, wobei das freie Lösungsmittel vollständig entfernt worden ist. Anschließend kann das geträgerte Katalysatorsystem mit einem niedrig siedenden Kohlenwasserstoff wie Pentan oder Hexan gewaschen und erneut getrocknet werden.

Das dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.

Als Additiv kann während oder nach der Herstellung des geträgerten Katalysatorsystems eine geringe Menge eines Olefins, bevorzugt eines $\alpha$-Olefins (beispielsweise Styrol oder Phenyldimethylvinylsilan) als aktivitätssteigernde Komponente, oder beispielsweise eines Antistatikums zugesetzt werden.

Als Antistatikum wird üblicherweise eine Mischung aus einem Metallsalz der Medialansäure, einem Metallsalz der Anthranilsäure und einem Polyamin eingesetzt. Derartige Antistatika werden beispielsweise in EP-A-0,636,636 beschrieben.

Das molare Verhältnis von Additiv zu Metallocenkomponente Verbindung (I) beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation eines oder mehrerer Olefine in Gegenwart des Katalysatorsystems, enthaltend mindestens eine Übergangsmetallkomponente der Formel I oder II, die bei dem erfindungsgemäßen Aufreinigungsverfahren erhältlich ist. Unter dem Begriff Polymerisaton wird eine Homopolymerisation wie auch eine Copolymerisation verstanden.

Die bei dem erfindungsgemäßen Aufreinigungsverfahren erhaltenen Metallocene der Formeln I und II, zeigen gegenüber den Dihalogen-Verbindungen zumindest gleichwertige, zum Teil jedoch höhere Aktivitäten in der Polymerisation von Olefinen, und die erhaltenen Polyolefine zeigen eine Verminderung der unerwünschten niedermolekularen extrahierbaren Anteile.

Das dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan, eingesetzt werden. Die Alkylverbindung wird den Monomeren oder dem Suspensionsmittel zugesetzt und dient zur Reinigung der Monomere von Substanzen, die die Katalysatoraktivität beeinträchtigen können. Die Menge der zugesetzten Alkylverbindung hängt von der Qualität der eingesetzten Monomere ab.

Als Molmassenregler und/oder zur Steigerung der Aktivität wird, falls erforderlich, Wasserstoff zugegeben.

Bei der Polymerisation kann das Antistatikum zusammen mit oder getrennt von dem eingesetzten Katalysatorsystem in das Polymerisationssystem eindosiert werden.

Die mit dem Katalysatorsystem, das mindestens eines der bei dem erfindungsgemäßen Aufreinigungsverfahren erhaltenen Metallocene der Formeln I und II enthält, dargestellten Polymere, zeigen eine gleichmäßige Kornmorphologie und weisen keine Feinkornanteile auf. Bei der Polymerisation mit dem Katalysatorsystem treten keine Beläge oder Verbackungen auf.

Mit dem Katalysatorsystem werden Polymere, wie Polypropylen mit außerordentlich hoher Stereo- und Regiospezifität erhalten.

Besonders charakteristisch für die Stereo- und Regiospezifität von Polymeren, insbesondere von Polypropylen, ist die Triaden-Taktizität (TT) und der Anteil an 2-1-insertierten Propeneinheiten (RI), die sich aus den $^{13}C$-NMR-Spektren ermitteln lassen.

Die $^{13}C$-NMR- Spektren werden in einem Gemisch aus Hexachlorbutadien und Tetrachlorethan-$d_2$ bei erhöhter Temperatur (365 K) gemessen. Alle $^{13}C$-NMR-Spektren der gemessenen Polypropylen-Proben wer-den auf das Resonanzsignal von Tetrachlorethan-$d_2$ ($\delta$ = 73.81 ppm) geeicht.

Zur Bestimmung der Triaden-Taktizität des Polypropylens werden die Methyl-Resonanzsignale im $^{13}C$-NMR-Spektrum zwischen 23 und 16 ppm betrachtet; vgl. J. C. Randall, Polymer Sequence Determination: Carbon-13 NMR Method, Academic Press New York 1978; A. Zambelli, P. Locatelli, G. Bajo, F. A. Bovey, Macromolucules 8 (1975), 687-689; H. N. Cheng, J. A. Ewen, Makromol. Chem. 190 (1989), 1931-1943. Drei aufeinander folgende 1-2-insertierte Propeneinheiten, deren Methylgruppen in der "Fischer-Projektion" auf der gleichen Seite angeordnet sind, bezeichnet man als mm -Triade ($\delta$ = 21.0 ppm bis 22.0 ppm). Zeigt nur die zweite Methylgruppe der drei aufeinander folgenden Propeneinheiten zur anderen Seite, spricht man von einer rr-Triade ($\delta$ = 19.5 ppm bis 20.3 ppm) und zeigt nur die dritte Methylgruppe der drei aufeinander folgenden Propeneinheiten zur anderen Seite, von einer mr-Triade ($\delta$ = 20.3 ppm bis 21.0 ppm). Die Triaden-Taktizität berechnet man nach folgender Formel:

$$TT\ (\%) = mm / (mm + mr + rr) \cdot 100$$

Wird eine Propeneinheit invers in die wachsende Polymerkette insertiert, spricht man von einer 2-1-Insertion; vgl. T. Tsutsui, N. Ishimaru, A. Mizuno, A. Toyota, N. Kashiwa, Polymer 30, (1989), 1350-56. Folgende verschiedene strukturelle Anordnungen sind möglich:

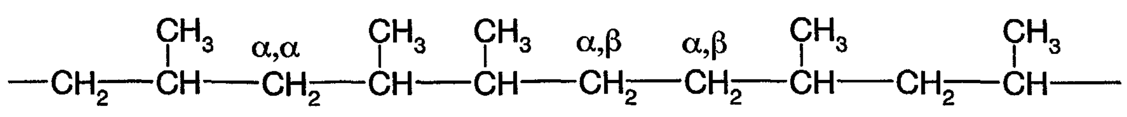

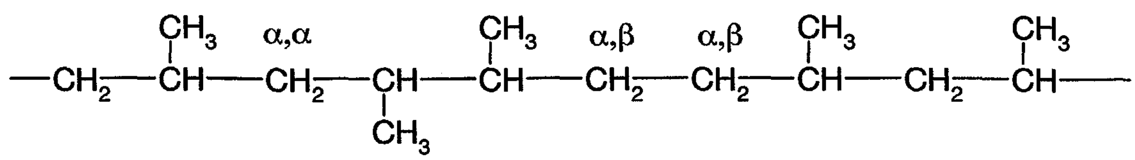

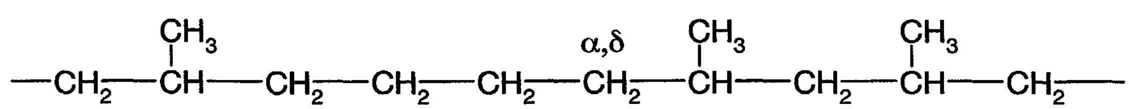

Der Anteil an 2-1-insertierten Propeneinheiten (RI) kann nach folgender Formel berechnet werden:

$$RI\ (\%) = 0.5\ I\alpha,\beta\ (I\alpha,\alpha + I\alpha,\beta + I\alpha,\delta) \cdot 100,$$

wobei

$I\alpha,\alpha$ die Summe der Intensitäten der Resonanzsignale bei $\delta$ = 41.84, 42.92 und 46.22 ppm,
$I\alpha,\beta$ die Summe der Intensitäten der Resonanzsignale bei $\delta$ = 30.13, 32.12, 35.11 und 35.57 ppm

sowie

$I\alpha,\delta$ die Intensität des Resonanzsignals bei $\delta$ = 37.08 ppm bedeuten.

Das isotaktische Polypropylen, das mit dem Katalysatorsystem hergestellt worden ist, zeichnet sich durch einen Anteil an 2-1-insertierten Propeneinheiten RI < 0.5% bei einer Triaden-Taktizität TT > 98.0% und einen Schmelzpunkt > 153°C aus, wobei $M_w/M_n$ des erfindungsgemäßen Polypropylens zwischen 2.5 und 3.5 liegt.
Die mit dem Katalysatorsystem herstellbaren Copolymere zeichnen sich durch eine gegenüber dem Stand der Technik deutlich höhere Molmasse aus. Gleichzeitig sind solche Copolymere durch Einsatz des Katalysatorsystems mit hoher Produktivität bei technisch relevanten Prozessparametern ohne Belagsbildung herstellbar.
Die nach dem Verfahren hergestellten Polymere sind insbesondere zur Herstellung reißfester, harter und steifer Formkörper wie Fasern, Filamente, Spritzgußteile, Folien, Platten oder Großhohlkörpern (z.B. Rohre) geeignet.
Die Erfindung wird durch folgende, die Erfindung jedoch nicht einschränkende Beispiele erläutert.
Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösungsmittel wurden vor Gebrauch mit Argon gespült und über Molsieb absolutiert.

Beispiel 1: Dimethylsilandiyl-bis(2-methyl-4,5-benzo-indenyl)-zirkonium-monochloro-mono-(2,4-di-tert.-butylphenolat) (1)

20.6 g (0.1 mol) 2,4-Di-tert.-butylphenol wurden in 200 ml Toluol/20 ml THF bei Raumtemperatur mit 37.2 ml (0.1 mol) einer 20%igen Lösung von Butyllithium in Toluol versetzt. Es wurde 1 h bei 60°C nachgerührt. Bei Raumtemperatur wurden 28.8 g (0.05 mol) Dimethylsilandiyl-bis(2-methyl-4,5-benzo-indenyl)-zirkoniumdichlorid als Feststoff zugegeben. Die Suspension wurde 3h bei 100°C gerührt und anschließend heiß über Celite filtriert. Der Filterkuchen wurde noch 3 mal mit je 100 ml Toluol (100°C) extrahiert. Nach Einengen des Lösungsmittels wurde der ausgefallene gelbe Feststoff abfiltriert und im Vakuum getrocknet. Es wurden 31.1 g (83 %) Dimethylsilandiyl-bis(2-methyl-4,5-benzo-indenyl)-zirkonium-monochloro-mono-(2,4-di-tert.-butyl-phenolat) (1) erhalten.
1H-NMR (400 MHz, $CDCl_3$): 8.05 (dd,1H), 7.75 (m, 2H), 7.65 (dd, 1H), 7.60 (1H), 7.5 - 7.15 (m, 6H), 7.1 (m, 1H), 7.0 (m, 1H), 6.85 (s, 1H), 6.8 (d, 1H), 6.65 (m, 1H), 5.45 (d, 1H), 2.82 (s, 3H), 2. 45 (s, 3H), 1.45 (s, 3H), 1.35 (s, 3H), 1.25 (s, 9H), 0.95 (s, 9H).

Löslichkeitsvergleich:

50 mg Dimethylsilandiyl-bis(2-methyl-4,5-benzo-indenyl)-zirkoniumdichlorid lösten sich bei Raumtemperatur vollständig in 240 ml Toluol (Löslichkeit ca. 0.36 mmol/1).
50 mg der Verbindung (1) lösten sich bei Raumtemperatur in < 5 ml Toluol sofort auf (Löslichkeit > 13 mmol/1).
Beispiel 1a: Katalysatordarstellung mit (1) und Polymerisation:
35,1 mg (0,047 mmol) (1) wurden in 2,1 ml 30%-iger MAO-Lösung in Toluol (Al/Zr=215) für 60 Minuten bei Raumtemperatur gerührt. Anschließend wurden 2 g $SiO_2$ (Grace XPO2107, vorbehandelt bei 140°C, 10 mbar, 10 Std.) dazugegeben und weitere 10 Minuten gerührt. Das Lösungsmittel wurde im Ölpumpenvakuum entfernt.
Ein trockener 21-Reaktor wurde zunächst mit Stickstoff und anschließend mit Propylen gespült und mit 1,5 1 flüssigem Propylen befüllt. Dazu wurden 2 ml TEA (20% ig in Varsol) gegeben und 15 Minuten gerührt. Anschließend wurde das oben hergestellte Katalysatorsystem (0,886 g) in 20 ml Heptan resuspendiert eingespritzt und mit 15 ml Heptan nachgespült. Das Reaktionsgemisch wurde auf die Polymerisationstemperatur von 60°C aufgeheizt und 1 Stunde polymerisiert. Gestoppt wurde die Polymerisation durch Abgasen des restlichen Propylens. Das Polymer wurde im Vakuumtrockenschrank getrocknet. Es resultierten 470 g Polypropylen-Pulver. Der Reaktor zeigte keine Beläge an der Innenwand oder Rührer. Die Katalysatoraktivität betrug 0,53 kg PP/g Katalysator x h.

Vergleichsbeispiel:

Katalysatordarstellung mit Dimethylsilandiyl-bis-(2-methyl-4,5-benzo-indenyl)-zirkoniumdichlorid und Polymerisation

27,1 mg (0,047 mmol) Dimethylsilandiyl-bis-(2-methyl-4,5-benzoindenyl)-zirkoniumdichlorid wurden in 2,1 ml 30%-iger MAO-Lösung in Toluol (Al/Zr=215) für 60 Minuten bei Raumtemperatur gerührt. Anschließend wurden 2 g $SiO_2$ (Grace XPO2107, vorbehandelt bei 140°C, 10 mbar, 10 Std.) dazugegeben und weitere 10 Minuten gerührt. Das Lösungsmittel wurde im Ölpumpenvakuum entfernt.

Ein trockener 21-Reaktor wurde zunächst mit Stickstoff und anschließend mit Propylen gespült und mit 1,5 1 flüssigem Propylen befüllt. Dazu wurden 2 ml TEA (20% ig in Varsol) zugegeben und 15 Minuten gerührt. Anschließend wurde das oben hergestellte Katalysatorsystem (0,897 g) in 20 ml Heptan resuspendiert eingespritzt und mit 15 ml Heptan nachgespült. Das Reaktionsgemisch wurde auf die Polymerisationstemperatur von 60°C aufgeheizt und 1 Stunde polymerisiert. Gestoppt wurde die Polymerisation durch Abgasen des restlichen Propylens. Das Polymer wurde im Vakuumtrockenschrank getrocknet. Es resultierten 410 g Polypropylen-Pulver. Der Reaktor zeigte keine Beläge an der Innenwand oder Rührer. Die Katalysatoraktivität betrug 0,46 kg PP/g Katalysator x h.

Beispiel 2: Dimethylsilandiyl-bis(2-methyl-indenyl)-zirkonium-monochloro-mono-(2,4-di-tert.-butyl-phenolat) (2)

1.03 g (5 mmol) 2,4-Di-tert.-butylphenol wurden in 10 ml Toluol/1 ml THF bei Raumtemperatur mit 1.85 ml (5 mmol) einer 20%igen Lösung von Butyllithium in Toluol versetzt. Es wurde 1 h bei 60°C nachgerührt. Bei Raumtemperatur wurden 1.19 g (2.5 mmol) Dimethylsilandiybis(2-methyl-indenyl)-zirkoniumdichlorid als Feststoff zugegeben. Die Suspension wurde 2h bei 60°C gerührt und anschließend heiß über Celite filtriert. Der Filterkuchen wurde noch 3 mal mit je 10 ml Toluol (60°C) extrahiert. Nach Einengen des Lösungsmittels wurde der ausgefallene gelbe Feststoff abfiltriert und im Vakuum getrocknet. Es wurden 0.87 g (53 %) Dimethylsilandiyl-bis(2-methyl-indenyl)-zirkonium-monochloromono-(2,4-di-tert.-butyl-phenolat) (2) erhalten.
1H-NMR (400 MHz, $CDCl_3$): 8.03 (dd,1 7.6 (dd, 1H), 7.25 - 7.2 (m, 2H), 7.15 (m, 1H), 7.1-7.0 (m, 2H), 6.9 (m, 1H), 6.8 (s, 1H), 6.75 (m, 1H), 6.7 (m, 1H), 6.3 (s, 1H), 5.55 (d, 1H), 2.65 (s, 3H), 2. 3 (s, 3H), 1.3 (s, 3H), 1.25 (s, 9H), 1.22 (s, 3H), 1.15 (s, 9H).

Löslichkeitsvergleich:

50 mg Dimethylsilandiyl-bis(2-methyl-indenyl)-zirkoniumdichlorid lösten sich bei Raumtemperatur vollständig in 50 ml Toluol (Löslichkeit ca. 2.1 mmol/1).

50 mg der Verbindung (2) lösten sich bei Raumtemperatur in < 5 ml Toluol sofort auf (Löslichkeit > 15 mmol/1).

Beispiel 3: Dimethylsilandiyl-bis(2-methyl-4,5-benzo-indenyl)-zirkonium-monochloro-mono-(2-isopropyl-5-methylphenolat) (3)

2.7 g (17.4 mmol) 2-Isopropyl-5-methylphenol wurden in 20 ml Toluol/2 ml THF bei Raumtemperatur mit 6.5 ml (17.4 mmol) einer 20%igen Lösung von Butyllithium in Toluol versetzt. Es wurde 1 h bei 60°C nachgerührt. Bei Raumtemperatur wurden 5.0 (8.7 mmol) Dimethylsilandiyl-bis(2-methyl-4,5-benzo-indenyl)-zirkoniumdichlorid als Feststoff zugegeben. Die Suspension wurde 4h bei 100°C gerührt und anschließend heiß über Celite filtriert. Der Filterkuchen wurde noch 2 mal mit je 25 ml Toluol (100°C) extrahiert. Nach Einengen des Lösungsmittels wurde der ausgefallene gelbe Feststoff abfiltriert und im Vakuum getrocknet. Es wurden 2.5 g (41 %) Dimethylsilandiyl-bis(2-methyl-4,5-benzo-indenyl)-zirkoniummonochloro-mono-(2-isopropyl-5-methyl-phenolat) (3) erhalten.
1H-NMR (400 MHz, $CDCl_3$): 7.9 (dd,1H), 7.81 (m, 1H), 7.74 (m, 1H), 7.54 (m, 2H), 7.45 - 7.08 (m, 8H), 6.65 (d, 1H), 6.55 (s, 1H), 6.35 (m, 1H), 5.56 (d, 1H), 2.58 (s, 3H), 2. 35 (s, 3H), 2.3 (m, 1H), 2.1 (s, 3H), 1.37 (s, 3H), 1.27 (s, 3H), 0.75 (d, 3H), 0.62 (d, 3H).

Löslichkeitsvergleich:

50 mg Dimethylsilandiyl-bis(2-methyl-4,5-benzo-indenyl)-zirkoniumdichlorid lösten sich bei Raumtemperatur vollständig in 240 ml Toluol (Löslichkeit ca. 0.36 mmol/1).

50 mg der Verbindung (3) lösten sich bei Raumtemperatur in 4 ml Toluol auf (Löslichkeit ca. 18 mmol/1).

Beispiel 4: Dimethylsilandiyl-bis(2-methyl-indenyl)-zirkonium-monochloro-mono-(2-isopropyl-5-methyl-phenolat) (4)

3.2 g (21 mmol) 2-Isopropyl-5-methylphenol wurden in 20 ml Toluol/2 ml THF bei Raumtemperatur mit 7.8 ml

(21 mmol) einer 20%igen Lösung von Butyllithium in Toluol versetzt. Es wurde 1 h bei 60°C nachgerührt. Bei Raumtemperatur wurden 5.0 g (10.5 mmol) Dimethylsilandiyl-bis(2-methyl-indenyl)-zirkoniumdichlorid als Feststoff zugegeben. Die Suspension wurde 2h bei 100°C gerührt und anschließend heiß über Celite filtriert. Der Filterkuchen wurde noch 2 mal mit je 25 ml Toluol (100°C) extrahiert. Nach Einengen des Lösungsmittels wurde der ausgefallene gelbe Feststoff abfiltriert und im Vakuum getrocknet. Es wurden 1.36 g ( 22 %) Dimethylsilandiyl-bis(2-methyl-indenyl)-zirkonium-monochloromono-(2-isopropyl-5-methyl-phenolat) (4) erhalten.
1H-NMR (400 MHz, $CDCl_3$): 8.0 (m,1H 7.81 (m, 1H), 7.3 - 6.8 (m, 8H), 6.55 (dm, 1H), 6.1 (s, 1H), 5.9 (d, 1H), 2.7 (hept, 1H), 2.45 (s, 3H), 2. 25 (s, 3H), 2.18 (s, 3H), 1.4 (s, 3H), 1.25 (s, 3H), 1.1 (d, 3H), 0.95 (d, 3H).

Löslichkeitsvergleich:

50 mg Dimethylsilandiyl-bis(2-methyl-indenyl)-zirkoniumdichlorid lösten sich bei Raumtemperatur vollständig in 50 ml Toluol (Löslichkeit ca. 2.1 mmol/1).
50 mg der Verbindung (4) lösten sich bei Raumtemperatur in 5 ml Toluol auf (Löslichkeit ca. 17 mmol/1).

Beispiel 5: Dimethylsilandiyl-bis(2-methyl-indenyl)-zirkonium-monochloro-mono-(2,4-di-methyl-phenolat) (5)

1.0 g (8.2 mmol) 2,4-Di-methylphenol wurden in 20 ml Toluol/2 ml THF bei Raumtemperatur mit 3.0 ml (8.2 mmol) einer 20%igen Lösung von Butyllithium in Toluol versetzt. Es wurde 1 h bei 60°C nachgerührt. Bei Raumtemperatur wurden 1.9 g (4.0 mmol) Dimethylsilandiyl-bis(2-methyl-indenyl)-zirkoniumdichlorid als Feststoff zugegeben. Die Suspension wurde 8h bei 60°C gerührt und anschließend heiß über Celite filtriert. Nach Einengen des Lösungsmittels auf ca. 7 ml wurde der bei -30°C ausgefallene gelbe Feststoff abfiltriert und im Vakuum getrocknet. Es wurden 0.65 g (29 %) Dimethylsilandiyl-bis(2-methyl-indenyl)-zirkonium-monochloromono-(2,4-di-methylphenolat) (5) erhalten.
1H-NMR (400 MHz, $CDCl_3$): 7.96 (dd,1H), 7.6 (m, 1H), 7.36 (m, 1H), 7.31 (m, 1H), 7.29 (d, 1H), 7.1 (m, 1H), 6.99 (m, 1H), 6.94 (m, 1H), 6.88 (s, 1H), 6.75 (m, 1H), 6.65 (m, 1H), 6.06 (s, 1H), 5.93 (d, 1H), 2.4 (s, 3H), 2. 24 (s, 3H), 2.18 (s, 3H), 1.85 (s, 3H), 1.35 (s, 3H), 1.24 (s, 3H).

Beispiel 6: Dimethylsilandiyl-bis(2-methyl-4,5-benzo-indenyl)-zirkonium-monochloro-mono-(2,4-di-tert.pentylphenolat) (6)

0.85 g (3.5 mmol) 2,4-Di-tert.-pentyl-phenol wurden in 10 ml Toluol/1 ml THF bei Raumtemperatur mit 1.3 ml (3.5 mmol) einer 20%igen Lösung von Butyllithium in Toluol versetzt. Es wurde 1 h bei 60°C nachgerührt. Bei Raumtemperatur wurden 1.0 (1.74 mmol) Dimethylsilandiyl-bis(2-methyl-4,5-benzo-indenyl)-zirkoniumdichlorid als Feststoff zugegeben. Die Suspension wurde 4h bei 100°C gerührt, mit 40 ml Toluol verdünnt und anschließend heiß über Celite filtriert. Der Filterkuchen wurde noch 2 mal mit je 25 ml Toluol (100°C) extrahiert. Nach Einengen des Lösungsmittels auf 10 ml wurde der ausgefallene gelbe Feststoff abfiltriert, mit wenig kaltem Toluol gewaschen und im Vakuum getrocknet. Es wurden 0.85 g (63 %) Dimethylsilandiyl-bis(2-methyl-4,5-benzo-indenyl)-zirkonium-monochloro-mono-(2,4-di-tert.pentyl-phenolat) (6) erhalten.
1H-NMR (400 MHz, $CDCl_3$): 8.00 (d,1H), 7.74 (t, 2H), 7.64-7.57 (m, 2H), 7.45 - 7.27 (m, 5H),7.14 (s, 1H), 7.10 (m, 1H), 6.98 (m, 1H), 6.78 (s, 1H), 6.65 (d, 1H), 6.52 (dd, 1H), 5.38 (d, 1H), 2.78 (s, 3H), 2. 41 (s, 3H), 1.46 (quart., 2H), 1.41 (s, 3H), 1.30 (s, 3H), 1.22 (m, 2H), 1.14 (s, 3H), 1.13 (s, 3H), 0.91 (s, 3H), 0.88 (s, 3H), 0.57 (t, 3H), 0.39 (t, 3H).

Löslichkeitsvergleich:

50 mg Dimethylsilandiybis(2-methyl-4,5-benzo-indenyl)-zirkoniumdichlorid lösten sich bei Raumtemperatur vollständig in 240 ml Toluol (Löslichkeit ca. 0.36 mmol/1).
55 mg der Verbindung (6) lösten sich bei Raumtemperatur in 4 ml Toluol auf (Löslichkeit ca. 17.7 mmol/1).

## Patentansprüche

1. Verfahren zur Aufreinigung von Verbindungen der Formel (Ia)

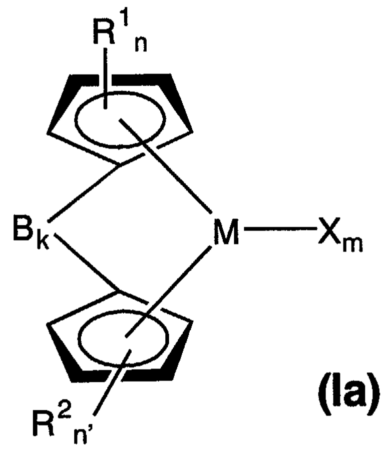

(Ia)

worin

M ein Metall der III., IV., V. oder VI. Nebengruppe des Periodensystems der Elemente ist, insbesondere Ti, Zr oder Hf, besonders bevorzugt Zirkonium,

$R^1$ gleich oder verschieden sind und ein Rest $SiR_3^{12}$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_i$-$C_{io}$-Fluoralkyl, $C_1$-$C_{10}$-Alkoxy, $C_6$-$C_{20}$-Aryl, $C_g$-$C_{io}$-Fluoraryl, $C_6$-$C_{10}$-Aryloxy, $C_2$-$C_{10}$-Alkenyl, $C_7$-$C_{40}$-Arylalkyl, $C_7$-$C_{4o}$-Alkylaryl oder $C_8$-$C_{40}$-Arylalkenyl,
oder $R^1$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist,
oder zwei oder mehrere Reste $R^1$ können so miteinander verbunden sein, daß die Reste $R^1$ und die sie verbindenden Atome des Cyclopentadienylringes ein $C_4$-$C_{24}$-Ringsystem bilden, welches seinerseits substituiert sein kann,

$R^2$ gleich oder verschieden sind und Rest $SiR_3^{12}$ ist, worin $R^{12}$ gleich oder verschieden ein Wasserstoffatom oder eine $C_1$-$C_{40}$-kohlenstoffhaltige Gruppe, bevorzugt $C_1$-$C_{20}$-Alkyl, $C_1$-$C_{10}$-Fluoralkyl, $C_1$-$C_{10}$-Alkoxy, $C_6$-$C_{14}$-Aryl, $C_6$-$C_{10}$-Fluoraryl, $C_6$-$C_{10}$-Aryloxy, $C_2$-$C_{10}$-Alkenyl, $C_7$-$C_{40}$-Arylalkyl, $C_7$-$C_{40}$-Alkylaryl oder $C_8$-$C_{40}$-Arylalkenyl,
oder $R^2$ eine $C_1$-$C_{30}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl, $C_7$-$C_{30}$-Arylalkyl, $C_7$-$C_{30}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl, fluorhaltiges $C_7$-$C_{30}$-Alkylaryl oder $C_1$-$C_{12}$-Alkoxy ist,
oder zwei oder mehrere Reste $R^2$ können so miteinander verbunden sein, daß die Reste $R^2$ und die sie verbindenden Atome des Cyclopentadienylringes ein $C_4$-$C_{24}$-Ringsystem bilden, welches seinerseits substituiert sein kann,

X ein Halogenatom, insbesondere Chlor, ist,

n gleich 1 bis 5 für k = 0, und n gleich 0 bis 4 für k = 1 ist,

n' gleich 1 bis 5 für k = 0, und n' gleich 0 bis 4 für k = 1 ist,

m gleich 1 bis 4 ist, bevorzugt 2,

k gleich Null oder 1 ist, wobei für k = 0 ein unverbrücktes Metallocen, für k = 1 ein verbrücktes Metallocen vorliegt, wobei k = 1 bevorzugt ist, und

B ein verbrückendes Strukturelement zwischen den beiden Cyclopentadienylringen bezeichnet, bedeutet

umfassend die Schritte:

a) Umsetzung der Verbindung der Formel (Ia) mit einer Ligandenaustausch-komponente

$$M^1YR^3$$

worin

$M^1$ ein Kation oder Kationfragment, insbesondere Li, Na, K, MgCl, MgBr, MgI, oder das mit einem Amin korrespondierende Ammoniumskation ist,

$R^3$ gleich oder verschieden Wasserstoff oder eine $C_1$-$C_{40}$ - kohlenstoffhaltige Gruppe, bevorzugt $C_1$-$C_{25}$-Alkyl, wie Methyl, Ethyl, tert.-Butyl, Cyclohexyl oder Octyl, $C_2$-$C_{25}$-Alkenyl, $C_3$-$C_{15}$-Alkylalkenyl, $C_6$-$C_{24}$-Aryl, $C_5$-$C_{24}$-Heteroaryl wie Pyridyl, Furyl oder Chinolyl, $C_7$-$C_{30}$-Arylalkyl, $C_7$-$C_{3o}$-Alkylaryl, fluorhaltiges $C_1$-$C_{25}$-Alkyl, fluorhaltiges $C_6$-$C_{24}$-Aryl, fluorhaltiges $C_7$-$C_{30}$-Arylalkyl oder fluorhaltiges $C_7$-$C_3$-Alkylaryl ist,

Y ein Element der 6. Hauptgruppe des Periodensystems der Elemente, insbesondere Sauerstoff oder Schwefel, oder ein Fragment $CR^3_2$, $NR^3$, $NR^3$(CO)-, $NR^3(SO_2)$-, PR $^3$ oder P(=O)$R^3$, O(CO)-, $O(SO_2)$-ist.

unter Ausbildung der Verbindung der Formel (I)

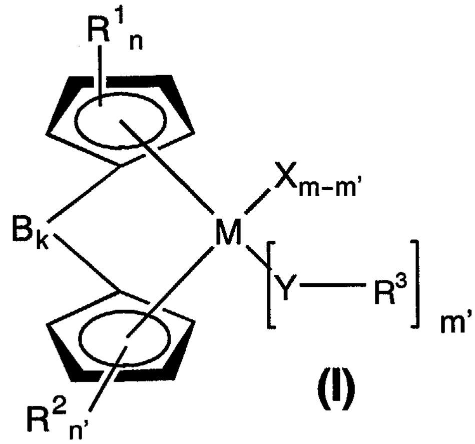

(I)

worin

| | |
|---|---|
| M, $R^1$, $R^2$, $R^3$, X, Y, n, n', m, k, B und $R^{12}$ | die vorstehende Bedeutung haben und |
| m' | gleich 1 bis 4 ist, bevorzugt 1 oder 2, wobei die Verbindung der Formel $M^1X$, wobei $M^1$ und X die vorstehenden Bedeutungen haben, abgespalten wird, in einem inerten Lösungsmittel oder Lösungsmittelgemisch, |

b) gegebenenfalls Abtrennung von festen Rückständen der Formel $_M1_X$
c) gegebenenfalls Abtrennen des inerten Lösungsmittels oder Lösungsmittelgemisches,
d) Umkristallisation der Verbindung der Formel (I) in einem inerten Lösungsmittel oder Lösungsmittelgemisch,
e) Abtrennen der Verbindung der Formel (I) von der Mutterlauge.

**2.** Verfahren gemäß Anspruch 1, **dadurch gekennzeichnet, daß** in Schritt d) Toluol, Hexan, Heptan, Xylol, Tetrahydrofuran (THF), Dimethoxyethan (DME), Toluol/THF, Heptan/DME oder Toluol/DME eingesetzt wird.